# EUROPÄISCHE PATENTSCHRIFT

(11) **EP 1 208 687 B1**
(45) Veröffentlichungstag und Bekanntmachung des Hinweises auf die Patenterteilung: **15.07.2009**
(21) Anmeldenummer: 00938639.2
(22) Anmeldetag: 12.05.2000
(51) Int. Cl.: H04M 1/725, G06T 15/70

(54) **VERFAHREN ZUM ÜBERMITTELN VON SYMBOLEN UND/ODER INFORMATIONEN VON EINEM SENDER ZU EINEM EMPFÄNGER**
METHOD FOR TRANSMITTING SYMBOLS AND/OR INFORMATION FROM A SENDER TO A RECIPIENT
PROCEDES DE TRANSMISSION DE SYMBOLES ET/OU D'INFORMATIONS ENTRE UN EXPEDITEUR ET UN DESTINATAIRE

(30) Priorität: 14.05.1999 DE 19922068; 19.05.1999 DE 19923026; 20.08.1999 DE 19940954; 27.08.1999 DE 19941642; 29.10.1999 DE 19954032
(43) Veröffentlichungstag der Anmeldung: 29.05.2002
(60) Teilanmeldung: 06025008.1
(73) Patentinhaber: Freie Erfindungskünstler GmbH, 13465 Berlin (DE)
(72) Erfinder: SCHÜTZE, Petra, D-13465 Berlin (DE); SCHARMBERG, Nils, D-13509 Berlin (DE); FLOREK, Christof, D-13465 Berlin (DE)
(74) Vertreter: Felber, Josef
(86) Internationale Anmeldenummer: PCT/EP2000/004339
(87) Internationale Veröffentlichungsnummer: WO 2000/070848

(56) Entgegenhaltungen:
- WO-A-91/03885
- WO-A-97/02700
- WO-A-97/35280
- US-A- 5 618 045
- US-A- 5 738 583
- US-A- 5 784 001
- PATENT ABSTRACTS OF JAPAN vol. 1998, no. 01, 30. Januar 1998 (1998-01-30) & JP 09 233515 A (NEC SHIZUOKA LTD), 5. September 1997 (1997-09-05) & US 6 044 248 A (MOCHIZUKI ET AL) 28. März 2000 (2000-03-28)

## Beschreibung

Die Erfindung betrifft Verfahren zum Übermitteln von Symbolen und/oder Informationen von einem Sender zu einem Empfänger. Weiterhin betrifft die Erfindung Vorrichtungen zum Verschlüsseln, Senden und Empfangen von Symbolen und/oder Informationen.

Derartige Verfahren und Vorrichtungen sind aus dem Stand der Technik bekannt. Derartige Vorrichtungen und Verfahren werden beispielsweise in modernen Mobiltelefonen verwendet. In diesen Mobiltelefonen werden beispielsweise bei dem Versenden einer SMS-Nachricht von dem Benutzer des sendenden Mobiltelefons bestimmte Symbole ausgewählt. Dabei handelt es sich im Stand der Technik in der Regel um die Standardsymbole "+", "-", ".", ",", ":", ";", """, "?", "!", "*", "/", "(",")", "<", "=", "> ", "%", "&", "§", "$", "@". Diese Symbole werden dann als Symbol übermittelt.

Aus dem Stand der Technik sind Verfahren und Vorrichtungen zum Übertragen von Informationen von einem Sender zu einem Empfänger bekannt. Diese Verfahren und Vorrichtungen werden beispielsweise in Mobiltelefonen eingesetzt. Neben Sprachübertragungen sind auch die Übermittlung sogenannter SMS(short message service)-Kurzmitteilungen bekannt. Hierzu wird beispielsweise auf Connect 8/99 Seite 30 ff. verwiesen. Demnach können über Mobiltelefone (Sender) Kurzmitteilungen über eine Kurzmitteilungszentrale eines Diensteanbieters an ein anderes Mobiltelefon (Empfänger) geschickt werden. Mittels derartiger Kurzmitteilungen lassen sich Sprachmitteilungen versenden.

Nachteilig bei den aus dem Stand der Technik bekanntgewordenen Mobiltelefonen, beziehungsweise bei den aus dem Stand der Technik bekanntgewordenen Verfahren und Vorrichtungen zum Übermitteln von Symbolen von einem Mobiltelefon zu einem anderen Mobiltelefon, ist es jedoch, dass die Symbole als solches übermittelt werden.

Dies erfordert bei der Übermittlung der Symbole und/oder Informationen eine erhebliche Datenmenge. Dies wiederum hat eine erhebliche Zeit zur Folge, die für die Übermittlung der Symbole und/oder Informationen notwendig ist.

Weiterhin ist es nachteilig, dass im Stand der Technik nur eine begrenzte Anzahl von Symbolen und/oder Informationen übermittelt werden kann. Das liegt vor allem auch an der für die Symbole und/oder Informationen benötigten erheblichen Datenmenge, die bei der Übermittlung der Symbole und/oder Informationen übermittelt werden muss.

Es besteht jedoch erheblicher Bedarf bei den Benutzern eines Mobiltelefons, auch andere Symbole und/oder Informationen übermitteln zu können, ohne dass ihre Telefonrechnung, das heißt ohne dass die Zeit, die zur Übermittlung der Symbole benötigt wird, über Gebühr ansteigt.

Nachteilig bei den bekannten Vorrichtungen und Verfahren zum Übermitteln von Audio-Informationen von einem Sender an einen Empfänger ist es, dass im Stand der Technik regelmäßig die Audio-Information selbst, das heißt beispielsweise Tonsignale und dergleichen, von dem Sender an den Empfänger übermittelt werden. Das bedeutet beispielsweise bei elektromagnetischer Übertragung, das heißt bei einer Übertragung mit Hilfe elektromagnetischer Wellen, wie sie beispielsweise bei Mobiltelefonen üblich ist, dass die Tonsignale selbst übertragen werden, das heißt in Modulationen der Übertragungsfrequenz umgewandelt und versandt werden. Daraus ergibt sich im Stand der Technik eine erhebliche Datenmenge, die bei der Übertragung von Tonsignalen erforderlich ist. So muss beispielsweise bei digitaler Übertragung jedes einzelne Tonsignal in eine Abfolge von Fehlenbit umgewandelt und anschließend müssen diese Fehlenbitinformationen übertragen werden. Diese erforderlichen umfangreichen Datenmengen bedingen wiederum einen gewissen Zeitaufwand, der die Übertragung verlängert beziehungsweise verzögert.

Ferner ist bekannt, in Mobiltelefone Spielfunktionen zu integrieren. Hier wird beispielsweise auf Connect Heft 8/99 Seite 20 verwiesen. Diese Spielfunktionen sind auf einer Anzeigeeinrichtung des Mobiltelefons aufrufbar und von einem Bediener intern nutzbar.

Weiters sind aus dem Stand der Technik Pager bekannt, welche Bildern entsprechende Codes zuordnen (siehe z.B. US-A-5 784 001).

Aufgabe der vorliegenden Erfindung ist es daher, Verfahren und Vorrichtungen der eingangs genannten Art derart weiterzuentwickeln, dass die vorgenannten Nachteile vermieden werden und dass es möglich ist, Symbole mit geringerem Zeitaufwand zu übermitteln und eine erweiterte Informationsübertragung möglich ist.

Diese Aufgabe wird durch ein Verfahren mit den im Anspruch 1 genannten Merkmalen gelöst.

Die Vorteile dieser Vorgehensweise gemäß dieses Verfahrens liegen insbesondere darin, dass durch die Erfindung nunmehr die sprachlichen Ausdrücke von dem Sender zu dem Empfänger übermittelt werden müssen. Es muss daher beispielsweise dann, wenn von dem Benutzer einer Vorrichtung, die dieses Verfahren verwendet, das Symbol Sonne zum Versenden ausgewählt wird, nur noch das Wort "Sonne" übermittelt werden und nicht mehr das Symbol an sich. Die Übermittlung des Wortes "Sonne" verlangt jedoch erheblich weniger Sendezeit, so dass der Sendevorgang schneller und kostengünstiger abzuwickeln ist. Auf der Empfangsseite wird dann der sprachliche Ausdruck wiederum in das ihm zugeordnete Symbol umgewandelt, so dass der Empfänger der Nachricht dann auf seinem Display oder dergleichen ein Sonnensymbol sieht.

Bei einer bevorzugten Ausführungsform kann sendeseitig das bestimmte Symbol aus einer Tabelle von Symbolen ausgewählt werden. Dies kann beispielsweise mit Hilfe eines Displays geschehen. So kann beispielsweise der Benutzer eines Mobiltelefons auf dem Display aus einer ganzen Reihe beziehungsweise Tabelle von Symbolen ein bestimmtes Symbol auswählen, welches er versenden möchte. Das Mobiltelefon wird dann intern das ausgewählte Symbol in das entsprechende Wort beziehungsweise in den entsprechenden sprachlichen Ausdruck umwandeln und diesen sprachlichen Ausdruck versenden. Mit Hilfe einer derartigen Tabelle von Symbolen wird die Auswahl von Symbolen für den Benutzer erheblich vereinfacht. Bevorzugt werden die Symbole beziehungsweise wird die Tabelle von Symbolen zuvor in einem Speicher abgespeichert.

In einer weiteren bevorzugten Ausführungsform wird die Auswahl der Symbole und/oder die Zuordnung des sprachlichen Ausdrucks zu dem ausgewählten Symbol und/oder das Senden beziehungsweise Empfangen des sprachlichen Ausdrucks von einem Mikroprozessor gesteuert. Bevorzugt lässt sich somit das Verfahren mit einer Vorrichtung verwirklichen, die auf einer Platine integriert den Speicher zum Speichern der Tabelle von Symbolen und zugeordneten sprachlichen Ausdrücken, den Mikroprozessor und die Eingabeeinheit beziehungsweise Tastatur aufweist. Somit lässt sich das Verfahren vollständig in modernen Mobiltelefonen anwenden, da es keinerlei zusätzliche Vorkehrungen benötigt, die nicht in bekannte Mobiltelefone integrierbar wären. Das erfindungsgemäße Verfahren beziehungsweise die erfindungsgemäße Vorrichtung zum Übermitteln von Symbolen von einem Sender zu einem Empfänger lässt sich daher vollständig in heutigen Mobiltelefonen anwenden.

Weiter bevorzugt ist ein Verfahren, bei dem beim Absenden des sprachlichen Ausdrucks von dem Sender dem sprachlichen Ausdruck ein Kennzeichen hinzugefügt wird. Dieses Kennzeichen dient dazu, den sprachlichen Ausdruck von anderen sprachlichen Ausdrücken zu unterscheiden, die nicht ein Symbol darstellen. So wird beispielsweise beim Versenden des oben erwähnten Symbols Sonne zunächst das Symbol Sonne in das Wort "Sonne" umgewandelt und anschließend mit einem Kennzeichen, beispielsweise mit dem Kennzeichen "#", versehen. Der derart mit dem Identifizierungsmittel "#" versehene sprachliche Ausdruck wird dann von der Sendeeinheit des Senders versandt. Empfangsseitig ist es aufgrund dieser Identifizierung von sprachlichen Ausdrücken möglich, normale sprachliche Ausdrücke von sprachlichen Ausdrücken zu unterscheiden, die ein Symbol verschlüsseln. Denn empfangsseitig ist es bei einer bevorzugten Ausführungsform möglich zu erkennen, ob ein sprachlicher Ausdruck die Kennzeichnung, die ihn als verschlüsseltes Symbol kennzeichnet, aufweist oder nicht. Wenn der sprachliche Ausdruck keine Kennzeichnung aufweist, die ihn als verschlüsseltes Symbol kennzeichnet, wird er auf der Empfangsseite als der sprachliche Ausdruck an sich verarbeitet beziehungsweise dem Benutzer des empfangenden Mobiltelefons angezeigt. Handelt es sich jedoch um einen gekennzeichneten sprachlichen Ausdruck, so erkennt die Empfangseinheit, dass es sich um ein verschlüsseltes Symbol handelt und sucht bevorzugt in einer in einem Speicher abgelegten Tabelle das entsprechende zugeordnete Symbol. Sobald das Symbol empfangsseitig ermittelt wurde, kann das Symbol angezeigt werden. Der Benutzer auf der Empfangsseite merkt daher nicht, dass nur der sprachliche Ausdruck übermittelt wurde, sondern sieht direkt das Symbol und bekommt das Gefühl, dass das Symbol selbst übermittelt wurde.

Auch empfangsseitig kann das Verfahren mit Hilfe eines Mirkoprozessors verwirklicht werden, welcher das Abrufen der Tabellen von Symbolen und zugeordneten sprachlichen Ausdrücken aus dem Speicher steuert und welcher auch die Empfangseinheit des Empfängers und gegebenenfalls auch die Anzeigeeinheit zum Anzeigen des schließlich ermittelten Symbols steuert.

Bei einer besonders bevorzugten Ausführungsform verarbeitet ein Mikroprozessor einen in einem Speicher abgelegten Algorithmus, wenn er ein Symbol in einen sprachlichen Ausdruck umwandeln soll. Somit wird bei dieser Ausführungsform keine Tabelle benötigt. Diese Zuordnung von sprachlichem Ausdruck zu Symbol kann auch empfangsseitig bei der Zuordnung eines Symbols zu dem sprachlichen Ausdruck mit Hilfe eines Algorithmus ausgeführt werden. Eine andere Ausführungsform der Erfindung weist die erfindungsgemäße Verschlüsselung nur einseitig auf. Das heißt, dass bei dieser Ausführungsform das Verfahren nur auf einer Seite, das heißt nur bei dem Empfänger oder nur bei dem Sender, das Symbol verschlüsselt beziehungsweise verschlüsselt wiedergibt. Das bedeutet, dass bei dieser Ausführungsform beim Senden beispielsweise von dem Benutzer nur der sprachliche Ausdruck eingegeben wird. Dabei kann der Benutzer bevorzugt diesen sprachlichen Ausdruck mit einem Kennzeichen versehen. Anschließend wird der gekennzeichnete sprachliche Ausdruck von dem Sender an den Empfänger versandt. In diesem Fall ist dann nur der Empfänger in der Lage, den gekennzeichneten sprachlichen Ausdruck in das entsprechende Symbol umzuwandeln. Dies kann beispielsweise der Fall sein, wenn nur das empfangende Mobiltelefon mit entsprechenden Anzeigevorrichtungen ausgestattet ist, die eine Anzeige eines Symbols erlauben, während das sendende Mobiltelefon eine Symbolanzeige nicht ermöglicht.

Bei dem umgekehrten Fall ist es sendeseitig möglich, das Symbol in einen sprachlichen Ausdruck umzuwandeln, während es empfangsseitig nicht möglich ist. Somit wird in diesem umgekehrten Fall nur sendeseitig eine Umwandlung des ausgewählten Symbols in einen sprachlichen Ausdruck vorgenommen, während empfangsseitig einfach der sprachliche Ausdruck angezeigt wird. In dem eingangs genannten Beispiel wäre es somit so, dass der Benutzer des sendenden Mobiltelefons das Symbol Sonne auswählt, anschließend gemäß dem erfindungsgemäßen Verfahren das Symbol Sonne gemäß der Zuordnungstabelle in den sprachlichen Ausdruck "Sonne" umgewandelt und weiter anschließend dieser sprachliche Ausdruck versandt wird. Auf der Empfangsseite wird dann, beispielweise mangels Anzeigemöglichkeit für das Symbol "Sonne", dieser sprachliche Ausdruck selbst angezeigt.

In einer anderen Ausführungsform der Erfindung erkennt das erfindungsgemäße Verfahren beziehungsweise die erfindungsgemäße Vorrichtung vor der Verschlüsselung des ausgewählten Symbols, in welcher Sprache das ausgewählte Symbol verschlüsselt werden soll. Gegebenenfalls kann der Benutzer dies auch vorgeben. Bei Mobiltelefonen bedeutet dies dann beispielsweise, dass bei einem Mobiltelefon, welches sich im Besitz eines deutschsprachigen Benutzers befindet oder bei welchem von dem Benutzer die deutsche Sprache als Übertragungssprache vorgegeben wird, das Symbol Sonne als das Wort "Sonne" übermittelt wird. Handelt es sich jedoch bei dem Benutzer des Mobiltelefons um einen englischsprachigen Benutzer oder wird die englische Sprache von dem Benutzer gewählt, so wird das Symbol Sonne als der sprachliche Ausdruck "sun" übermittelt. Bei einer weiteren Ausführungsform sind in dem Speicher alle wichtigen Sprachen der Welt einprogrammiert. Das sendende Telefon sendet dann in der bei dem sendenden Telefon eingestellten Sprache, während das empfangende Telefon in den verschiedenen Tabellen, die im Speicher abgelegt sind, die gerade empfangene Sprache mittels des Mikroprozessors heraussucht und dann das von dem Sender ausgewählte Symbol anzeigt.

Bei einer weiteren Ausführungsform ist der Sender ein Telefon und der Empfänger ein Personalcomputer (PC) oder ein Faxgerät. Das gesendete Symbol wird dann von dem PC dargestellt oder von dem Fax ausgedruckt.

Dadurch, dass sendeseitig wenigstens zwei zusammengehörige, nicht identische Symbole ausgewählt werden, zu jedem der zwei Symbole sendeseitig ein sprachlicher Ausdruck ermittelt wird, die den Symbolen zugeordneten sprachlichen Ausdrücke dem Empfänger gesendet werden und empfangsseitig die Folge der sprachlichen Ausdrücke in die zugeordneten Symbole gewandelt werden und die zugeordneten Symbole nacheinander auf einer Anzeigeeinrichtung angezeigt werden, wird es vorteilhaft möglich, in einfacher Weise von einem Sender zu wenigstens einem Empfänger bewegte Bilder zu übertragen. Die Folge der zueinander gehörenden, nicht identischen Symbole entsprechen vorzugsweise den einzelnen Bildsequenzen eines bewegten Bildes, so dass durch Aneinanderreihen von wenigstens zwei dieser Sequenzen (Symbole) eine Darstellung bewegter Bilder möglich ist. Vorzugsweise werden mehr als zwei Symbole ausgewählt und die entsprechenden sprachlichen Ausdrücke aneinander gereiht, so dass auch Bildfolgen mit entsprechend mehreren Sequenzen übertragbar und empfangsseitig darstellbar sind.

In bevorzugter Ausgestaltung der Erfindung ist vorgesehen, dass empfangsseitig die empfangenen Symbole (Bildsequenz) als Schleife wiederholt werden, so dass eine einmal gesendete Folge von Bildsequenzen empfangsseitig fortlaufend als bewegtes - sich in diesem Falle wiederholendes bewegtes - Bild dargestellt wird.

In bevorzugter Ausgestaltung der Erfindung ist vorgesehen, dass die einzelnen Symbole sendeseitig in einer abgespeicherten Tabelle aufrufbar sind und ein den Symbolen zugeordneter sprachlicher Ausdruck übermittelt wird. Durch die Übertragung von Bildsequenzen eines bewegten Bildes kann vorzugsweise vorgesehen sein, dass den einzelnen Symbolen, die zur Darstellung eines bewegten Bildes naturgemäß nur geringfügig unterschiedlich sind, ein gleicher sprachlicher Ausdruck zugeordnet ist, der sich nur in einer die jeweilige Abweichung der folgenden Bildsequenz zur vorhergehenden Bildsequenz kennzeichnenden Änderung, Zusatz oder dergleichen unterscheidet. Hierdurch wird der Aufwand zur Übertragung bewegter Bilder durch eine Folge von in sprachliche Ausdrücke gewandelte Bildsequenzen auf ein Minimum reduziert, da die zu übertragende Datenmenge erheblich reduziert ist.

Sendeseitig werden die empfangenen sprachlichen Ausdrücke durch eine in einem Speichermittel abgelegte Tabelle in die entsprechend zugehörigen Symbole gewandelt und auf der Anzeigeeinrichtung dargestellt.

Ferner ist in bevorzugter Ausgestaltung der Erfindung vorgesehen, dass bei einer übertragenen Folge von Symbole repräsentierenden sprachlichen Ausdrücken ein allgemeines Kennzeichen hinzugefügt wird, das für den Empfänger die Kurzmitteilung (in Folge der sprachlichen Ausdrücke) eindeutig als bewegte Bildinformation identifiziert. Hierdurch werden in einfacher Weise Unterscheidungen zwischen normalen beziehungsweise anderen Kurzmitteilungen und bewegten Bildinformationen möglich.

Dadurch, dass sowohl dem Sender als auch dem wenigstens einen Empfänger ein Mikroprozessor, der mit wenigstens einem Speichermittel zusammenwirkt, zugeordnet sind, und in dem Speichermittel eine vorgebbare Anzahl von Symbolen mit ihren zugehörigen sprachlichen Ausdrücken abgelegt sind, und eine Anzeigeeinrichtung zum Anzeigen von wenigstens zwei der Symbole und eine Sende- und Empfangseinrichtung zum Übermitteln der wenigstens zwei Symbole vorgesehen sind, kann in vorteilhafter Weise die Handhabung zur Übermittlung bewegter Bilder vereinfacht werden. Durch einfachen Aufruf der gewünschten Symbole, die in dem Speichermittel abgelegt sind, kann eine Wandlung der Symbole in die sprachlichen Ausdrücke und deren Aufbereitung zum Senden durch den Mikroprozessor automatisch gesteuert werden, so dass die Übertragung vereinfacht ist.

Dadurch, dass sendeseitig wenigstens zwei zusammengehörige, nicht identische Symbole ausgewählt werden, zu jedem der zwei Symbole sendeseitig eine Zeichenfolge ermittelt wird, die den Symbolen zugeordnete Zeichenfolgen dem Empfänger gesendet werden und empfangsseitig die Zeichenfolgen in die zugehörigen Symbole gewandelt werden und die Symbole nacheinander auf einer Anzeigeeinrichtung angezeigt werden und gleichzeitig wenigstens eine den Symbolen zugeordnete Tonfolge akustisch wiedergegeben wird, ist vorteilhaft möglich, neben einer sendeseitig ausgelösten empfangsseitigen Darstellung von bewegten Bildern gleichzeitig eine musikalische Untermalung auszulösen. Hierdurch kann der Empfänger entweder zusätzlich auf die übermittelten bewegten Bilder aufmerksam gemacht werden, indem auch bei einem momentan nicht sichtbaren Empfänger die musikalische Untermalung hörbar ist. Ferner kann hierdurch vorteilhaft erreicht werden, dass beim Empfänger der bewegten Bilder durch die musikalische Untermalung zusätzliche Emotionen, Erinnerungen, Gedanken oder dergleichen ausgelöst werden.

In bevorzugter Ausgestaltung der Erfindung ist vorgesehen, dass empfangsseitig die wenigstens eine den Symbolen zugeordnete Tonfolge fest zugeordnet ist. Hierdurch wird es möglich, die Übertragung der Informationen auf die Symbole, also die bewegten Bilder, zu begrenzen, wobei empfängerseitig eine den Symbolen zugeordnete Tonfolge automatisch wiedergegeben wird. Hierdurch wird ein Übertragungsaufwand für die zusätzliche Wiedergabe der Tonfolge nicht notwendig.

In weiterer bevorzugter Ausgestaltung der Erfindung ist vorgesehen, dass sendeseitig die empfangsseitig wiedergegebene Tonfolge beeinflussbar ist. Hierdurch wird vorteilhaft möglich, zusätzlich zu der Übertragung der in die Zeichenfolge gewandelten Symbole durch wenigstens ein Zeichen der übertragenen Zeichenfolge das empfangsseitige Wiedergeben einer bestimmten Tonfolge auszulösen. Bevorzugt sind empfangsseitig mehrere mögliche Tonfolgen abgespeichert, von denen durch die senderseitige Zeichenfolge wenigstens eine oder gegebenenfalls eine bestimmte Reihenfolge der möglichen Tonfolgen abrufbar sind.

Dadurch, dass sowohl dem Sender als auch dem wenigstens einen Empfänger ein Mikroprozessor, der mit wenigstens einem Speichermittel zusammenwirkt, zugeordnet ist, und in dem Speichermittel eine vorgebbare Anzahl von Symbolen mit ihren zugehörigen Zeichenfolgen sowie den Symbolen zugeordnete Tonfolgen abgelegt sind, und eine Anzeigeeinrichtung zum Anzeigen von wenigstens zwei der Symbole sowie eine akustische Wiedergabeeinrichtung zum Wiedergeben der wenigstens einen Tonfolge und eine Sende- und Empfangseinrichtung zum Übermitteln der Zeichenfolgen vorgesehen sind, kann in vorteilhafter Weise die Übertragung bewegter Bilder sowie das Anzeigen der bewegten Bilder, gekoppelt mit einer gleichzeitigen Wiedergabe einer Tonfolge, durchgeführt werden. Insbesondere durch die empfangsseitige Abspeicherung der den übertragenen Zeichenfolgen zugeordneten Symbole sowie der hiermit verknüpften Tonfolgen lassen sich bei senderseitiger Auslösung in einfacher Weise die bewegten Bilder mit der dazugehörigen wenigstens einen Tonfolge wiedergeben. Die senderseitige Aufbereitung der zu übertragenden Symbole und/oder Tonfolgen sowie die empfangsseitige Wiedergabe der Symbole und Tonfolgen können durch die Mikroprozessoren automatisch gesteuert werden, so dass die Handhabung derartiger Vorrichtungen einfach ist und keiner zusätzlichen Schulung bedarf.

Die entsprechende Vorrichtung gemäß der Erfindung zeichnet sich dadurch aus, dass ein Speicher vorgesehen ist zum Speichern von Audio-Information darstellenden Zeichen, dass ein Auswahlmittel vorgesehen ist, welches die Audio-Information in der Form mindestens eines diese Audio-Information darstellenden Zeichens aus dem Speicher auswählt und dass ein Sender vorgesehen ist zum Senden des die Audio-Information darstellenden mindestens einen Zeichens. Die Empfangsvorrichtung gemäß der Erfindung weist entsprechend einen Wandler zum Umwandeln der die Audio-Information darstellenden Zeichen in Tonsignale auf. Diese Tonsignale werden bei einer bevorzugten Ausführungsform von einem Lautsprecher oder dergleichen wiedergegeben.

Eine weitere bevorzugte Ausführungsform der Erfindung zeichnet sich dadurch aus, dass es sich bei der Audio-Information um mindestens einen Ton handelt. Diese Audio-Information wird dann bei einer weiter bevorzugten Ausführungsform eines diesen Ton darstellenden Buchstabens beziehungsweise einer diesen Ton darstellenden Note ausgewählt. Bei der erfindungsgemäßen Vorrichtung werden zu diesem Zweck die Audio-Informationen, das heißt in dieser Ausführungsform die die Audio-Information bildenden Buchstaben beziehungsweise Noten, in dem Speicher abgelegt. Aus diesem Speicher können sie dann mit Hilfe geeigneter Auswahlmittel, beispielsweise einem Touch-Screen oder einer normalen Tastatur, welcher Touch-Screen oder welche Tastatur mit einem Mikroprozessor verbunden ist, welcher Mikroprozessor den Speicher ansteuert, ausgewählt werden. Die Zeichen können dann in einer bevorzugten Ausführungsform von einer Sendeeinrichtung, die bevorzugt eine Antenne zum Senden von elektromagnetischen Wellen aufweist, an eine Empfangseinrichtung übermittelt werden. Die Empfangseinrichtung weist bevorzugt einen Speicher auf, in dem sich eine Tabelle befindet, die die Audio-Information darstellenden Zeichen, in diesem Falle die Buchstaben beziehungsweise Noten, den entsprechenden Tonsignalen zuordnen kann. Diese mit Hilfe eines empfangsseitig vorgesehenen Mikroprozessors zugeordneten Tonsignale können dann erfindungsgemäß durch einen Lautsprecher oder dergleichen als Tonsignal wiedergegeben werden.

Eine weitere bevorzugte Ausführungsform weist einen Speicher auf, in welchem ganze Melodien sendeseitig und/oder empfangsseitig abgespeichert sind. Diese Melodien können ebenfalls mit Hilfe von diese Melodien darstellenden Zeichen sendeseitig ausgewählt werden und an den Empfänger durch Übermittlung des die entsprechende Melodie darstellenden Zeichens übermittelt werden. Der Empfänger kann dann mit Hilfe der identischen Tabelle, die ebenfalls in einem Speicher abgelegt sein kann, die entsprechenden Melodien aufgrund des empfangenen Zeichens auffinden und/oder wiedergeben.

Besonders vorteilhaft lässt sich das erfindungsgemäße Verfahren beziehungsweise lassen sich die erfindungsgemäßen Vorrichtungen zum Senden und zum Empfangen von Audio-Information von einem Sender an einen Empfänger bei einem Mobiltelefon, einem sogenannten Handy, verwenden. Bei derartigen Mobiltelefonen wird dann über die Tastatur ein ein Tonsignal oder eine Melodie darstellendes Zeichen aus dem Speicher des Handys ausgewählt und durch entsprechenden Tastendruck abgesandt. Das empfangende Handy weist dann eine entsprechende Tabelle zur Umwandlung des abgesandten Zeichens, welches eine Audio-Information darstellt, in die entsprechende Audio-Information, das heißt beispielsweise ein Tonsignal oder eine Melodie, auf. Mit Hilfe eines in dem Empfangshandy vorgesehenen Mikroprozessors kann dann die mit Hilfe der entsprechenden Tabelle aufgefundene Melodie automatisch oder auf Wunsch des Benutzers des Empfangshandys über den Lautsprecher des Handys wiedergegeben werden. Somit lassen sich mit Hilfe dieser Erfindung durch Mobiltelefone auch kleine Musikstücke und dergleichen als Gruß verschicken, ohne dass die Sendezeit über Gebühr verlängert wird.

Besonders bevorzugt wird die Erfindung in Kombination mit der bekannten SMS-Nachricht verwendet. Auf diese Weise ist es möglich, beispielsweise durch Anhängen einer entsprechenden Kennung an normale Buchstaben, diese Buchstaben als verschlüsselte Töne zu kennzeichnen. Somit kann dann auf der Empfangsseite, beispielsweise bei einem empfangenden Handy einer solchen mit einem besonderen Kennzeichen versehenen SMS-Nachricht erkannt werden, dass es sich eigentlich um ein Tonsignal handelt. Bei entsprechender Ausrüstung des Empfangshandys, welche Ausrüstung die Erkennung des Kennzeichens und die Umwandlung des so gekennzeichneten Buchstabens in ein Tonsignal umfasst, lässt sich dann empfangsseitig das entsprechende Tonsignal über den Lautsprecher des Empfangshandys nach Empfang dieser neuartigen SMS-Nachricht wiedergeben.

Dadurch, dass sendeseitig aus einer vorgebbaren Anzahl von unterschiedlichen Spielen wenigstens ein Spiel aktiviert wird, das aktivierte Spiel auf einer Anzeigeeinrichtung des Senders mit einer zugehörigen Spielmaske angezeigt wird, von einer Bedienperson eine gewünschte Spielaktion ausgewählt wird, die gewünschte Spielaktion vom Sender zu dem Empfänger gesendet wird, empfangsseitig die sendeseitig gewünschte Spielaktion auf einer Anzeigeeinrichtung des Empfängers angezeigt wird, indem eine dem Spiel zugehörige Spielmaske aktiviert wird und die sendeseitig gewünschte Spielaktion in der Spielmaske visualisiert wird, ist vorteilhaft möglich, auch über beliebig große Entfernungen Spiele mit wenigstens zwei Spielern durchzuführen. Somit ergeben sich völlig neue Anwendungsgebiete. Darüber hinaus ist durch die Einbeziehung von mehreren Spielern der Unterhaltungswert verbessert.

In bevorzugter Ausgestaltung der Erfindung ist vorgesehen, dass die gewünschte Spielaktion sendeseitig über eine vorzugsweise als alphanumerische Tastatur ausgebildete Bedieneinrichtung eingegeben wird und als Kurzmitteilung dem Sender übermittelt wird. Hierdurch wird die zu übertragende Datenmenge für die Durchführung des Spieles auf ein Minimum reduziert.

Ferner ist in bevorzugter Ausgestaltung der Erfindung vorgesehen, dass bei einer übertragenen Spielaktion ein Kennzeichen hinzugefügt wird, das für den Empfänger die Kurzmitteilung eindeutig als Spielaktion identifiziert. Hierdurch werden in einfacher Weise Unterscheidungen zwischen normalen beziehungsweise weiteren Kurzmitteilungen und Spielinformationen möglich.

In weiterer bevorzugter Ausgestaltung der Erfindung ist vorgesehen, dass sendeseitig ein Spielwunsch einer einer Dienstezentrale zugeordneten Vermittlungsagentur übermittelt wird und diese Vermittlungsagentur aus einem dort vorhandenen Pool spielwilliger Empfänger wenigstens einen der Empfänger zur Aufnahme des Spiels vermittelt. Hierdurch wird es für eine sendeseitige Bedienperson möglich, jederzeit, unabhängig von einem bekannten Mitspieler, einen Spielwunsch zu äußern und mit wenigstens einem über die Verbindungsagentur zugeordneten Mitspieler das Spiel aufzunehmen.

Bevorzugt kann ferner vorgesehen sein, dass über die Vermittlungsagentur als Empfänger ein Spielcomputer, beispielsweise ein Schachcomputer, vermittelt wird. Hierdurch wird es für einen Sender auch möglich, ein Spiel - mit dem Spielcomputer - aufzunehmen, wenn gerade kein normaler Empfänger spielbereit ist.

Ferner ist in bevorzugter Ausgestaltung der Erfindung vorgesehen, dass über die dem Diensteanbieter zugeordnete Vermittlungsagentur eine Verbindung zu mehreren Empfängern gleichzeitig hergestellt wird, so dass quasi nach Art einer Konferenzschaltung auch Spiele mit mehr als zwei Mitspielern möglich sind.

Hierbei kann je nach Art des aktivierten Spiels entweder jeder gegen jeden, beispielsweise bei dem Spiel "Pachisi®", spielen oder ein Spieler gegen mehrere Spieler einzeln spielen, beispielsweise Simultanschach.

Dadurch, dass sowohl dem Sender als auch dem Empfänger ein Mikroprozessor zugeordnet ist, der mit einem Speichermittel verbunden ist, in dem wenigstens die Spielmaske eines Spiels abgelegt ist, kann in vorteilhafter Weise durch den Mikroprozessor die Spielmaske des wenigstens einen Spiels aufgerufen und auf der Anzeigeeinrichtung des Senders angezeigt werden. Gleichzeitig kann mittels des Mikroprozessors bei Anzeige einer Spielmaske auf der Anzeigeeinrichtung die alphanumerische Bedieneinrichtung des Senders auf "Spielbetrieb" umgeschaltet werden, so dass ein vereinfachtes Senden der gewünschten Spielaktionen möglich wird. Gleichzeitig können die erfolgten Spielaktionen und die erfolgten Spielreaktionen des Gegenspielers in dem Speichermittel abgespeichert werden, so dass ein laufendes Spiel jederzeit unterbrochen werden kann, ohne dass die bisherigen Spielaktionen verloren sind. Insofern kann ein Spiel zwischen wenigstens zwei Spielpartnern auch über einen längeren Zeitpunkt von beispielsweise Tagen, Wochen, Monaten oder dergleichen erfolgen. Das Speichermittel ist so ausgebindet, dass auch bei unterbrochener Energiezufuhr ein Speicherinhalt nicht verloren geht.

Ferner ist in bevorzugter Ausgestaltung der Erfindung vorgesehen, dass von dem in dem Sender zugeordneten Speichermittel eine Spielmaske wenigstens eines Spiels auf Anforderung dem Empfänger übermittelt wird. Somit wird vorteilhaft auch eine Spielaufnahme mit einem Empfänger möglich, dessen Empfangsgerät nicht über die notwendige Spielmaske zur Durchführung des Spiels verfügt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch ein erfindungsgemäßes Mobiltelefon zum Senden, Verschlüsseln und/oder Empfangen von Symbolen;
- Figuren 2 bis 26: verschiedene mit Hilfe des erfindungsgemäßen Verfahrens übermittelbare Symbole;
- Figur 27: schematisch die Ansicht eines Senders und/oder Empfängers zum Übermitteln von Informationen;
- Figur 28: ein Blockschaltbild zum Senden bewegter Bilder;
- Figur 29: ein Blockschaltbild zum Empfangen bewegter Bilder;
- Figuren 30 bis 35: schematisch verschiedene Möglichkeiten von zu sendenden bewegten Bildern;
- Figur 36: schematisch die Ansicht eines Senders und eines Empfängers zum Übermitteln von Informationen;
- Figur 37: ein Blockschaltbild zum Senden bewegter Bilder mit Tonfolgen;
- Figur 38: ein Blockschaltbild zum Empfangen bewegter Bilder mit Tonfolgen;
- Figuren 39 und 40: schematisch weitere Möglichkeiten von zu sendenden bewegten Bildern mit Tonfolgen;
- Figur 41: schematisch den Ablauf des erfindungsgemäßen Verfahrens gemäß einer Ausführungsform der Erfindung anhand eines schematisch dargestellten Ausführungsbeispiels einer erfindungsgemäßen Vorrichtung;
- Figur 42: schematisch eine Anordnung zum Übermitteln von Spielinformationen von einem Sender zu einem Empfänger;
- Figur 43: eine Anordnung zum Übermitteln von Spielinformationen von einem Sender zu wenigstens einem aus einer Vielzahl von Empfängern ausgewählten Empfänger und
- Figur 44: schematisch die Ansicht eines Senders oder Empfängers zum Übermitteln von Spielinformationen.

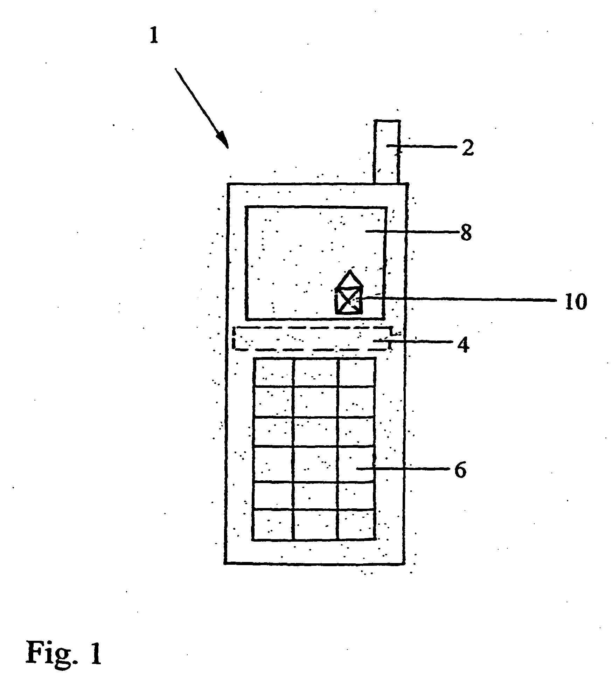

Figur 1 zeigt ein Mobiltelefon 1. Das Mobiltelefon 1 weist eine nicht dargestellte Sendeeinheit mit einer Antenne 2 auf. Die Antenne dient sowohl als Sendeantenne für die Sendeeinheit als auch als Empfangsantenne für die ebenfalls nicht dargestellte Empfangseinheit.

Weiterhin weist das Mobiltelefon 1 eine nicht dargestellte Batterie, einen nicht dargestellte Mikroprozessor und einen schematisch dargestellten Speicher 4 auf. Die Batterie versorgt das Mobiltelefon 1 mit Energie. Der Mikroprozessor dient zur Steuerung des Mobiltelefons 1 und seiner Komponenten.

Weiterhin zeigt das Mobiltelefon 1 eine als Eingabeeinheit dienende Tastatur 6. Mit Hilfe der Tastatur 6 lässt sich der Mikroprozessor derart aktivieren, dass ein mit Hilfe der Tastatur 6 ausgewähltes Symbol von dem Mikroprozessor aus dem Speicher 4 abgerufen und auf einer Anzeige 8 dargestellt wird. In dem in der Figur 1 dargestellten Beispiel zeigt das Mobiltelefon 1 auf der Anzeige 8 als Symbol 10 ein Haus. Bei der Anzeige 8 handelt es sich um eine Flüssigkristallanzeige. Andere Anzeigeförmen sind jedoch dem Fachmann geläufig.

Durch die Tastatur 6 lässt sich nun von dem Benutzer der Befehl an den Mikroprozessor eingeben, dass das angezeigte Symbol 10 von dem Mobiltelefon 1 mit Hilfe der Sendeeinheit und der Sendeantenne 2 an ein anderes, nicht dargestelltes Mobiltelefon verschickt werden soll. Zu diesem Zweck wird dann automatisch von dem Mikroprozessor gesteuert das Symbol 10, in diesem Fall ein Haus, anhand einer in dem Speicher 4 abgelegten Übersetzungstabelle in den sprachlichen Ausdruck "Haus" übersetzt. Dann wird dem sprachlichen Ausdruck "Haus" ein Kennzeichen, beispielsweise das Zeichen "#", hinzugefügt. Wiederum anschließend wird von dem Mikroprozessor gesteuert der so gebildete Ausdruck "Haus#" an die Sendeeinheit übergeben. Diese Sendeeinheit sendet dann mit Hilfe der Sendeantenne 2 den Begriff "Haus#" an das andere Mobiltelefon.

Bei dem anderen Mobiltelefon wird mit Hilfe einer Empfangsantenne der Begriff "Haus#" empfangen, von einer Empfangseinheit übernommen, von der Empfangseinheit an einen Mikroprozessor weitergegeben, von dem Mikroprozessor gesteuert, anhand einer in dem anderen Mobiltelefon abgespeicherten Tabelle einem bestimmten Symbol zugeordnet und das derart aufgefundene Symbol auf einer Anzeige des anderen Mobiltelefons zur Anzeige gebracht. Somit bekommt der Benutzer des anderen Mobiltelefons das Gefühl, dass er das Symbol Haus übermittelt bekommen hat.

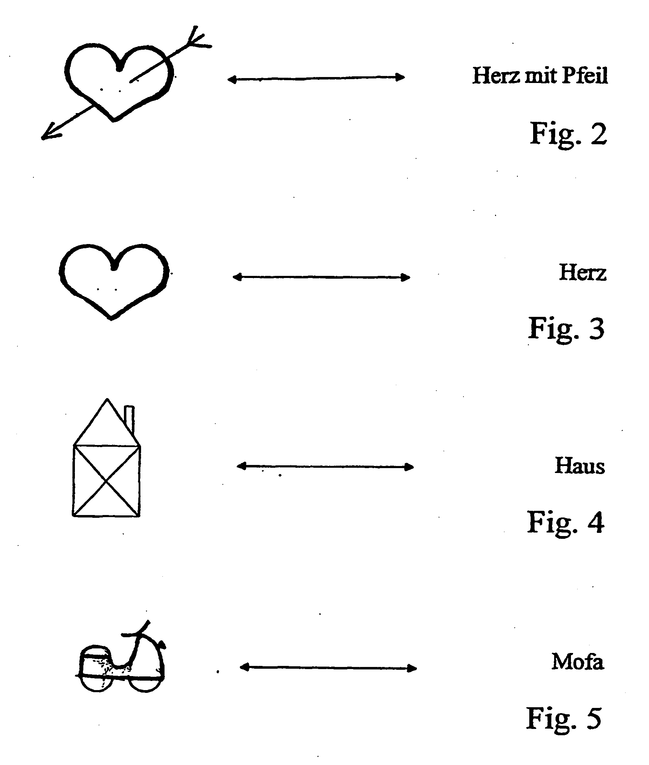

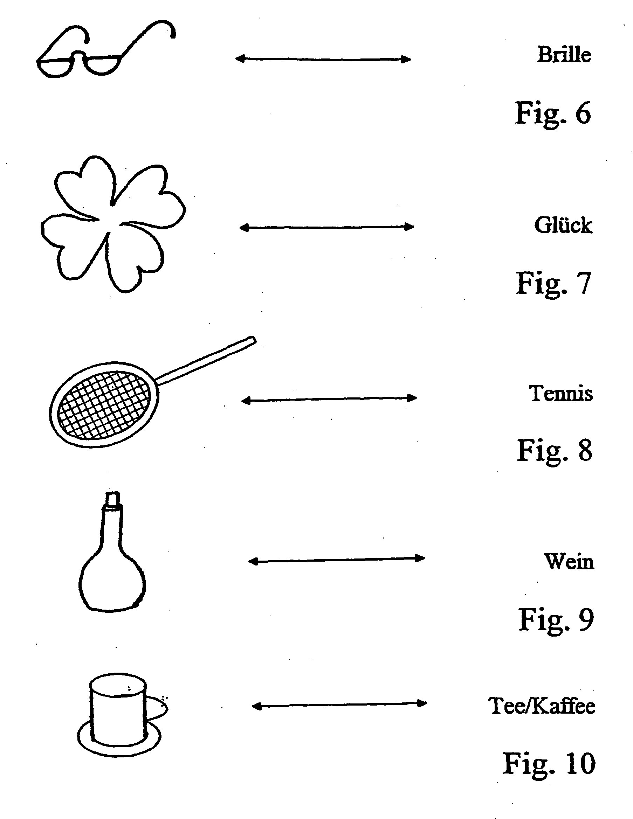

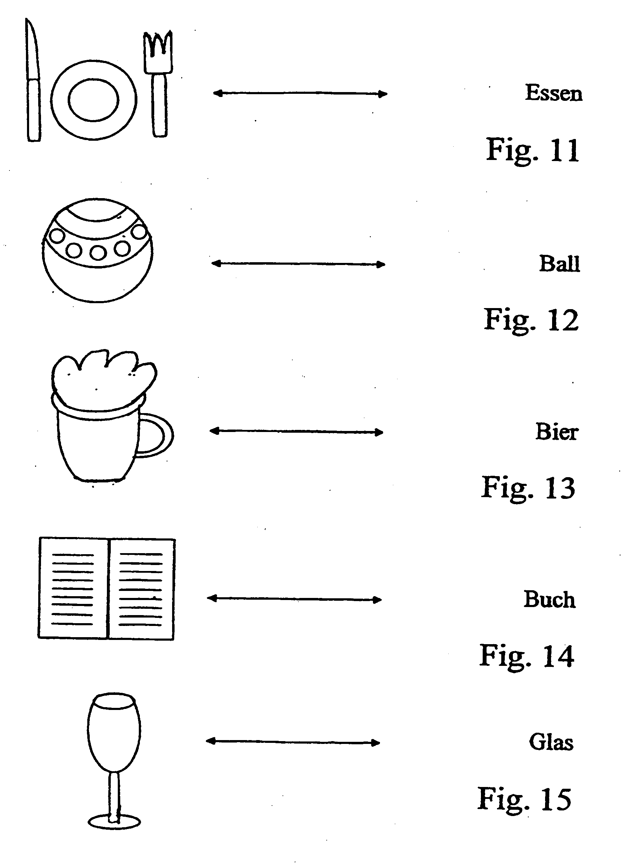

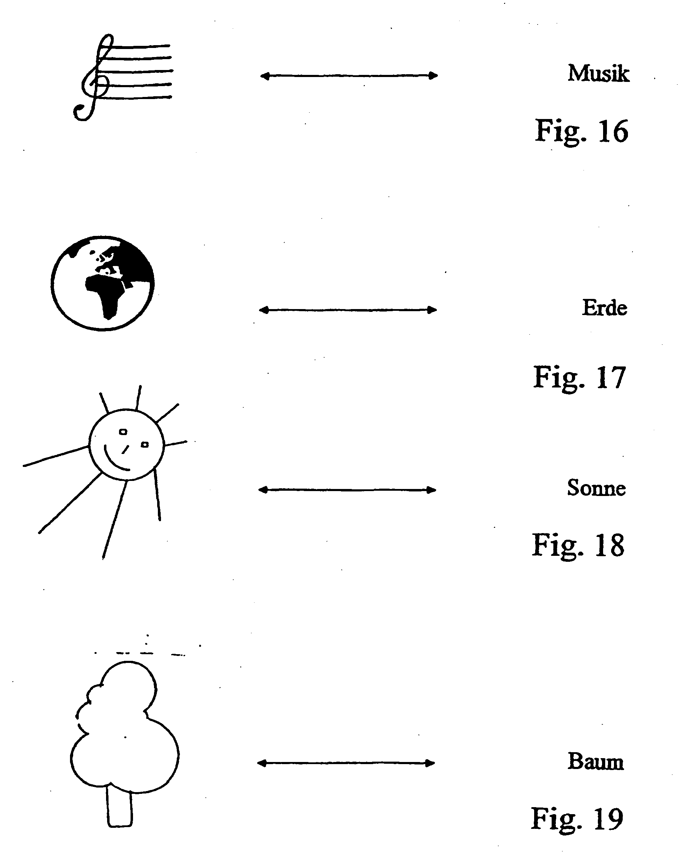

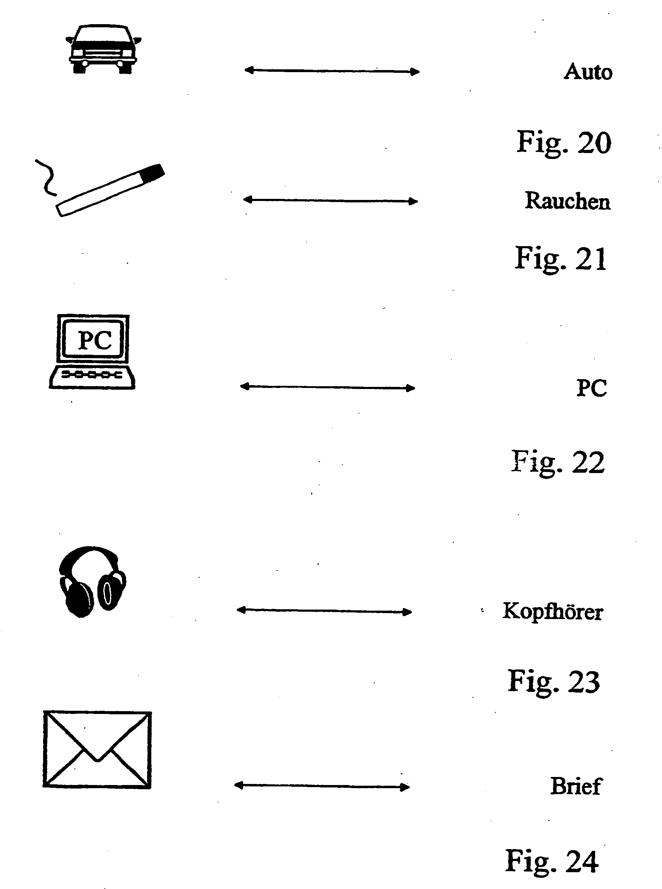

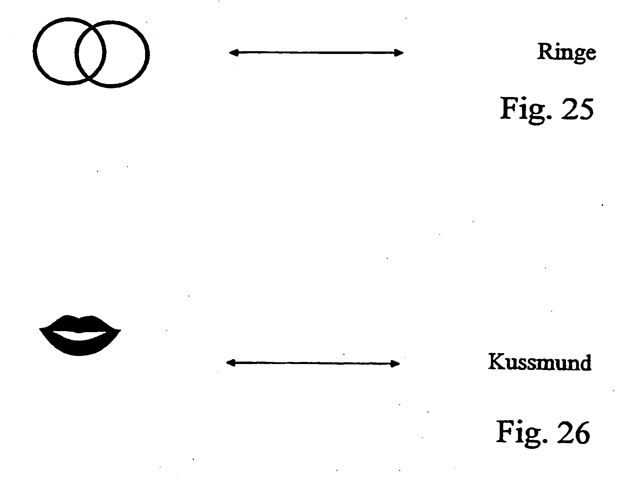

Die Figuren 2 bis 26 zeigen Beispiele von mittels des erfindungsgemäßen Verfahrens übermittelbaren Symbolen. In den Figuren sind links jeweils die auswählbaren und zu übermittelnden Symbole dargestellt, während rechts die jeweils zugeordneten sprachlichen Ausdrücke gezeigt sind. Eine der oben genannten Tabellen enthält beispielsweise alle in den Figuren gezeigten Symbole und die entsprechenden zugeordneten Ausdrücke. Vor dem Senden wird das jeweilige Symbol in den Ausdruck übersetzt.

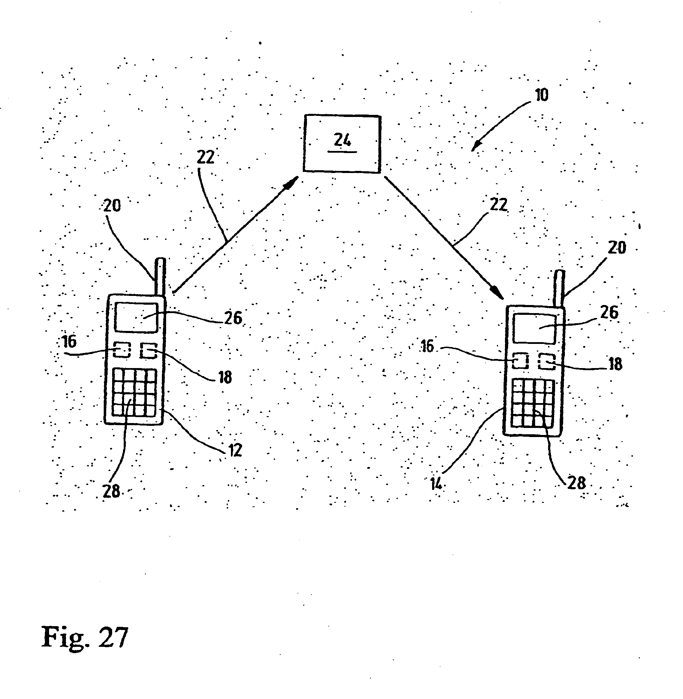

Figur 27 zeigt schematisch eine Anordnung 10 zum Übermitteln von bewegten Bildern von einem Sender 12 zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über ein entsprechendes - noch zu erläuterndes - Display verfügen. Bei den nachfolgenden Ausführungsbeispielen wird davon ausgegangen, dass es sich bei Sender 12 und Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 einer sich im Besitz des Empfängers 14 befindenden Person eine bewegte Bildinformation senden möchte. Die Bedienperson des Senders 12 ruft hierzu - in später noch zu erläuternder Weise - aus einem Speichermittel 16 eine Abfolge von Bildsequenzen (später auch Symbole genannt), die in zeitlich versetzter Darstellung ein bewegtes Bild ergeben, auf. Diese Folge von wenigstens zwei zusammengehörigen, nicht identischen Symbolen werden mittels eines Mikroprozessors 18 aufbereitet und über eine Sende- und Empfangseinrichtung 20 als Kurzmitteilung 22 einem Diensteanbieter 24 übermittelt. Diensteanbieter 24 sind beispielsweise Betreiber von Mobilfunksystemen, wie beispielsweise C-Netze, D-Netze, E-Netze oder dergleichen. Das Senden einer Kurzmitteilung 22 über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird die die Folge der Bildsequenzen repräsentierende Kurzmitteilung 22 dem Empfänger 14 übermittelt. Der Empfänger 14 erkennt - in ebenfalls noch zu erläuternder Weise - dass es sich bei der Kurzmitteilung 22 um die Darstellung bewegter Bilder handelt. Bei Aufruf der Kurzmitteilung 22 durch den Empfänger 14, was notwendigerweise nicht sofort, sondern auch zu einem späteren Zeitpunkt erfolgen kann, wird durch Erkennen der Bildfolge durch den Empfänger 14 durch einen ebenfalls vorgesehenen Mikroprozessor 18, der mit einem Speichermittel 16 zusammenwirkt, auf einer Anzeigeeinrichtung 26 die entsprechende Anzahl der Bildsequenzen zeitlich aufeinander folgend dargestellt, so dass für den Betrachter ein bewegtes Bild entsteht.

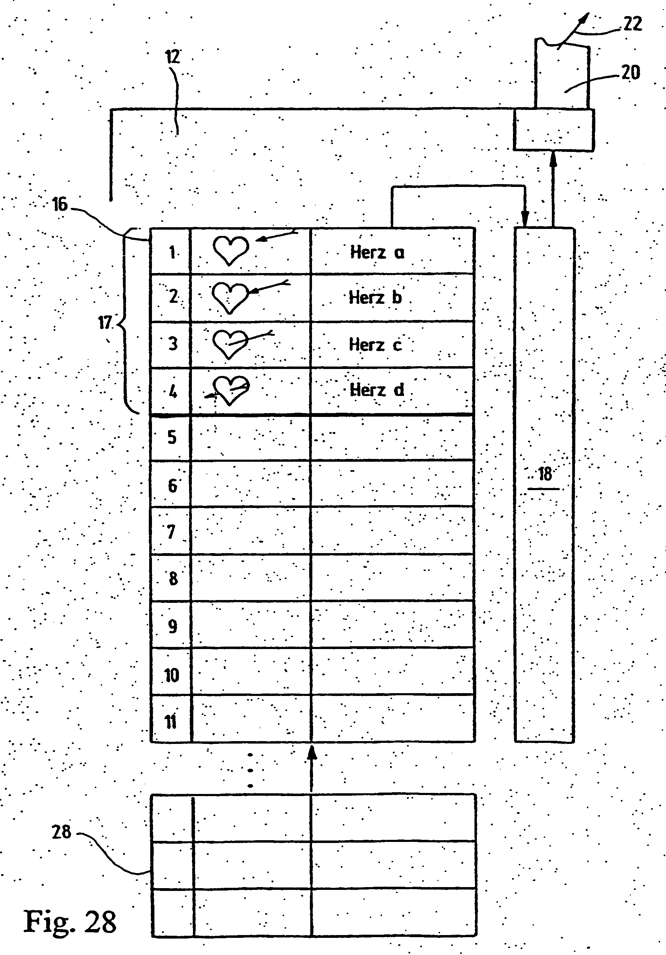

Figur 28 verdeutlicht in schematischer Blockschaltbilddarstellung das Senden bewegter Bilder. Gleiche Teile wie in Figur 27 sind mit gleichen Bezugszeichen versehen und nicht nochmals erläutert. Über eine Bedieneinrichtung 28, die beispielsweise von einer alphanumerischen Tastatur gebildet ist, können auf der Anzeigeeinrichtung 26 die bestehenden Möglichkeiten des Sendens von bewegten Bildern dargestellt werden. Diese Darstellung kann beispielsweise menügeführt erfolgen, indem durch Betätigen entsprechender Tasten der Bedieneinrichtung 28 die bestehenden Möglichkeiten einzeln, nacheinander oder zusammenhängend dargestellt werden. Bei dem erläuterten Ausführungsbeispiel wird davon ausgegangen, dass als bewegtes Bild ein sich einem Herz nähernder Pfeil übertragen werden soll. Dieses bewegte Bild ist beispielsweise in vier Bildsequenzen zerlegt, die im Speichermittel 16 unter Ordnungsnummer "1", "2", "3" und "4" abgelegt sind. Die einzelnen Bildsequenzen jeweils für sich betrachtet stellen eine Phase des Anfluges des Pfeiles auf das Herz dar. Jeder der Bildsequenzen, die quasi einem Bildsymbol entspricht, ist ein sprachlicher Ausdruck zugeordnet. Diese Zuordnung ist beispielsweise in der schematisch dargestellten tabellarischen Form im Speichermittel 16 abgelegt. Der Bildsequenz "1" ist beispielsweise der sprachliche Ausdruck "Herza" zugeordnet. Der Bildsequenz "2" ist der sprachliche Ausdruck "Herzb", der Bildsequenz "3" der sprachliche Ausdruck "Herzc" und der Bildsequenz "4" der sprachliche Ausdruck "Herzd" zugeordnet. Soll nunmehr vom Sender 12 dieser das Herz anfliegende Pfeil als bewegtes Bild einem Empfänger 14 übertragen werden, wird über den Mikroprozessor 18 die Sende- und Empfangseinheit 20 derart angesteuert, dass als Kurzmitteilung die Folge "HerzaHerzbHerzcHerzd" gesendet wird.

Empfängerseitig wird diese Kurzmitteilung von der dort vorhandenen Sende- und Empfangseinrichtung 20 dem dortigen Mikroprozessor 18 übermittelt, der durch Einlesen in dem dort ebenfalls vorhandenen Speichermittel 16 das zugehörige Bildsymbol (Bildsequenz) ermittelt. Durch Ansteuerung der Anzeigeeinrichtung 26 beim Empfänger 14 kann dann zeitlich aufeinander folgend die Darstellung der Bildsequenzen "1", "2", "3" und "4" erfolgen. Für den Betrachter der empfängerseitigen Anzeigeeinrichtung 20 ergibt sich somit als bewegliches Bild der anfliegende Pfeil auf das Herz.

Zur Vereinfachung der Übertragung kann vorgesehen sein, dass bei Auswahl der Ordnungsnummer "1" im Sender 12 automatisch alle zu einem Block 17 gehörenden Bildsequenzen, beispielsweise die Bildsequenzen mit den Ordnungsnummern "1", "2", "3" und "4", aufgerufen und zum Empfänger 14 gesendet werden.

Um eine zu übertragende Datenmenge weiter zu reduzieren, kann vorgesehen sein, dass bei Aufrufen der Ordnungsziffern "1", "2", "3" und "4" über den Mikroprozessor 18 automatisch erkannt wird, dass vier aufeinander folgende zusammengehörende (zu einem Block 17 gehörende), an sich lediglich geringfügig unterschiedliche Bildsymbole (Bildsequenzen) übertragen werden sollen. Hieraus kann als Kurzmitteilung dann eine verkürzte Mitteilung derart erfolgen, dass lediglich die Kurzmitteilung lautet "Herzabcd". Die Kurzmitteilung besteht somit aus einem die gesamte Bildfolge kennzeichnenden Stamm "Herz" und den einzelnen Bildsequenzen entsprechenden Zuordnungen "abcd". Es wird deutlich, dass diese zu übertragende Kurzmitteilung 22 weniger Daten benötigt als die oben erwähnte Aneinanderreihung der einzelnen Bildsequenzen mit ihren kompletten sprachlichen Ausdrücken. Empfängerseitig erfolgt dann über den dort vorgesehenen Mikroprozessor 18 eine entsprechende Rückwandlung und Darstellung auf der Anzeigeeinrichtung 26.

Um die Kurzmitteilung 22 für den Empfänger als Übermittlung zusammengehörender Bildsequenzen zu kennzeichnen, kann zusätzlich eine Kennzeichnung, beispielsweise mit der Taste "#" erfolgen, so dass die Kurzmitteilung dann aus der Zeichenfolge nach Variante 1 "HerzaHerzbHerzcHerzd#" oder nach der bevorzugten Kurzvariante 2 "Herzabcd#" besteht.

Selbstverständlich ist es für den Sender 12 auch möglich, aus einem zusammengehörenden Block von Bildsequenzen auch nur einzelne, beispielsweise zwei Bildsequenzen auszuwählen, die dann als Kurzmitteilung übertragen werden. Beispielsweise kann aus dem Block der Ordnungsnummern "1", "2", "3" und "4" die Ordnungsnummer "2" und "4" ausgewählt werden, so dass als Kurzmitteilung dann entweder "HerzbHerzd#" oder "Herzbd#" übermittelt wird. Entsprechend einer tatsächlich vorhandenen Anzahl von zusammengehörenden Bildsequenzen ergeben sich hierdurch unterschiedliche Möglichkeiten der Übertragung aus mehreren einzelnen Bildsequenzen bestehender bewegter Bilder.

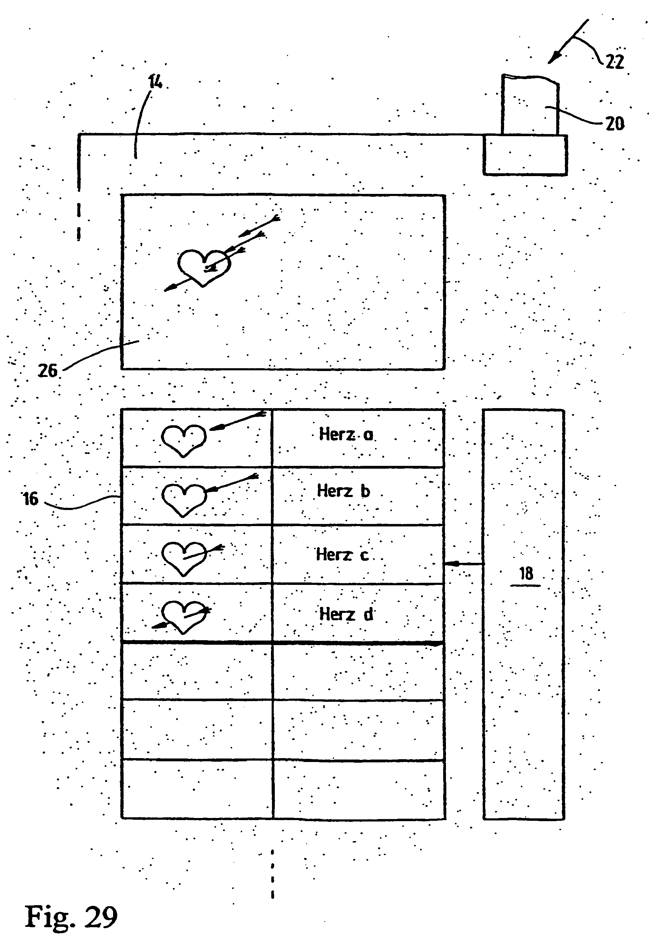

Figur 29 verdeutlicht nochmals schematisch den Empfang der Kurzmitteilung 22 beim Empfänger 14. Durch die Sende- und Empfangseinrichtung 20 erhält der Mikroprozessor 18 die Kurzmitteilung 22 und übermittelt diese der Speichereinheit 16. Durch die eindeutige Zuordnung der sprachlichen Ausdrücke zu den Bildsequenzen lässt sich entsprechend der empfangenen Kurzmitteilung 22 auf der Anzeigeeinrichtung 26 die zeitliche Abfolge der einzelnen Bildsequenzen darstellen. Bei dem gewählten Beispiel ist das "Herz" als konstanter identischer Bildteil nur einmal darzustellen, während der anfliegende "Pfeil" in seinen vier Flugphasen entsprechend den Ordnungsnummern "1", "2", "3" und "4", die sendeseitig vergeben sind, alternierend dargestellt wird. In der Anzeigeeinrichtung 26 in Figur 29 sind schematisch die vier Flugphasen des Pfeiles angedeutet, die selbstverständlich nacheinander dargestellt werden. Für den Betrachter der Anzeigeeinrichtung 26 ergibt sich dadurch der dem Herz sich nähernde Pfeil. Die Mikroprozessorschaltung 18 kann eine entsprechende Schleifenschaltung aufweisen, wonach die als Kurzmitteilung 22 übermittelten und über die Speichereinheit 16 in die Bildsequenzen gewandelten Symbole fortlaufend wiederholend dargestellt werden. Dies kann erfolgen, bis von einer Bedienperson am Empfänger 14 die Darstellung der bewegten Bildinformation unterbrochen beziehungsweise abgebrochen wird.

Das empfängerseitige Aufrufen der Kurzmitteilung 22 und somit das Darstellen der bewegten Bilder kann entweder sofort nach Empfang der Kurzmitteilung 22 oder auch später erfolgen. Hierzu erfolgt eine entsprechende Zwischenspeicherung, bis von der Bedienperson des Empfängers 14 das Abrufen erfolgt.

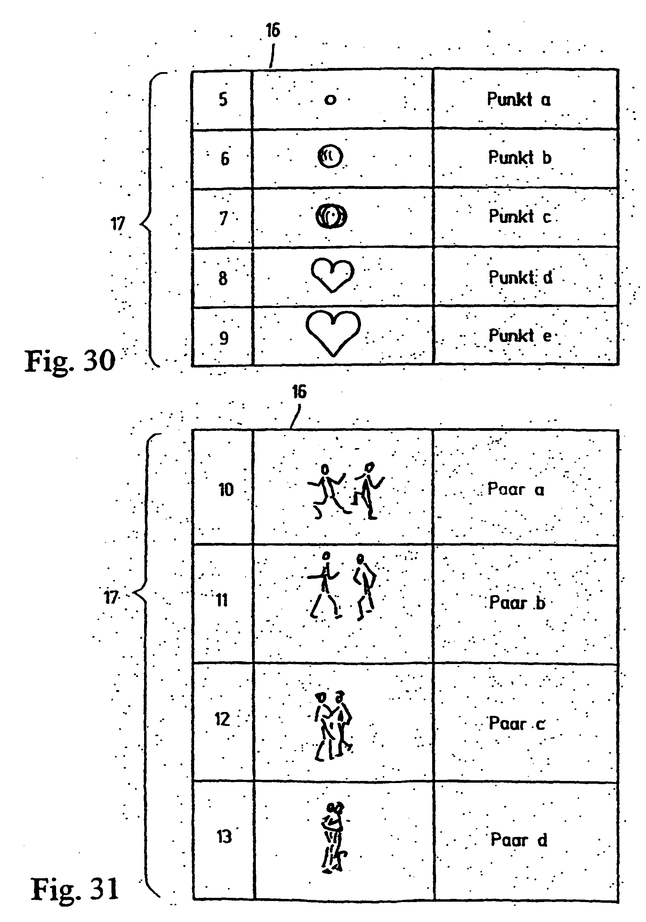

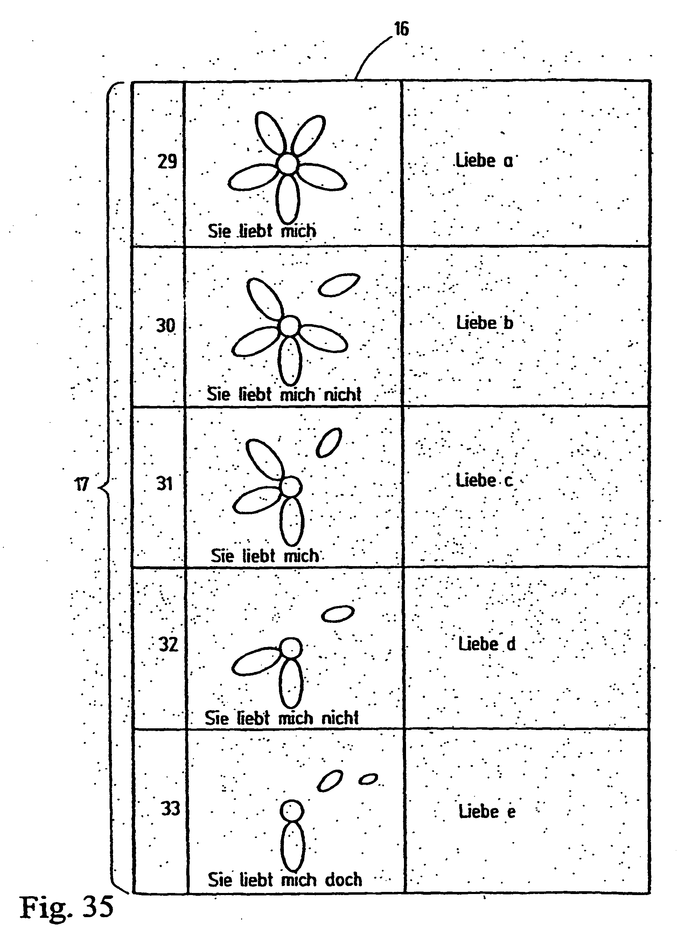

In den Figuren 30 bis 35 sind weitere Ausführungsbeispiele dargestellt, die unterschiedliche Bildsequenzen für die Übertragung von bewegten Bildern betreffen. Dargestellt ist jeweils schematisch das Speichermittel 16, wobei zusammengehörende Bildsequenzen jeweils in einem Block 17 mit den zugehörigen Ordnungsnummern gezeigt sind. Hinsichtlich des Aufrufes und Sendens der in den Figuren 30 und 35 beispielhaft dargestellten Bildsequenzen wird auf die Beschreibung zu den Figuren 27 bis 29 verwiesen.

Gemäß Figur 30 kann vorgesehen sein, dass ein bewegtes Bild darin besteht, dass aus einem Punkt ein sich vergrößerndes Herz entsteht. Die einzelnen mit den Ordnungsnummern "5", "6", "7", "8" und "9" bezeichneten Bildsequenzen können die sprachlichen Ausdrücke "Punkta", "Punktb", "Punktc", "Punktd" und "Punkte" zugeordnet bekommen. Die Übertragung kann dann wiederum entweder aus einer Aneinanderreihung der sprachlichen Ausdrücke, beispielsweise "PunktaPunktbPunktcPunktdPunkte#" oder gemäß der Kurzvariante "Punktabcde#" erfolgen.

Figur 31 zeigt als Ausführungsbeispiel ein sich näherndes Paar, das aus insgesamt vier mit den Ordnungsnummern "10", "11", "12", "13" bezeichneten Bildsequenzen besteht.

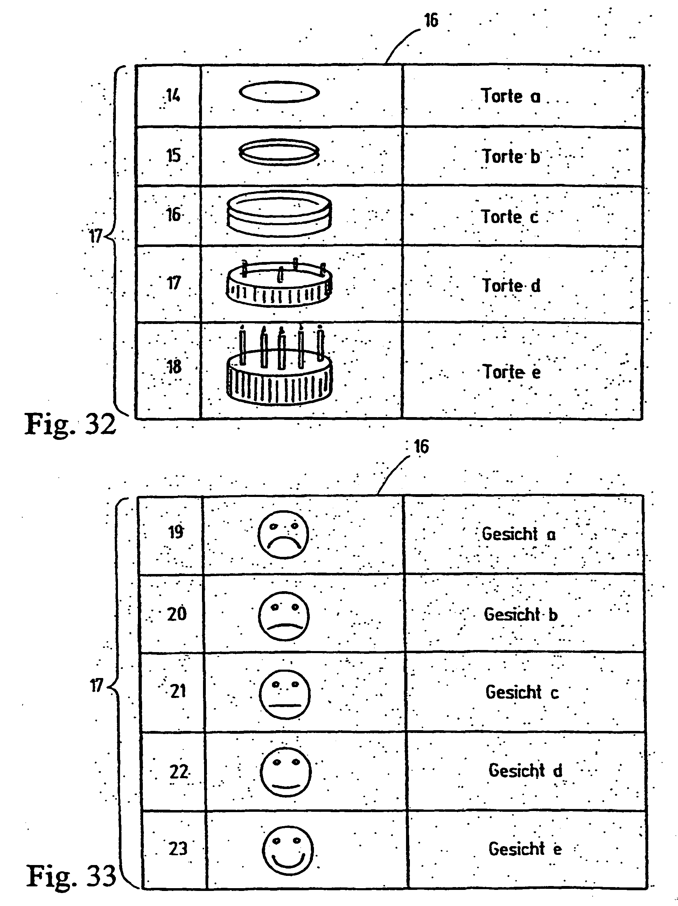

Figur 32 zeigt die Möglichkeit der Darstellung einer Geburtstagstorte mit insgesamt mit den Ordnungsnummern "14" "15", "16" "17" "18" bezeichneten Bildsequenzen. Hier kann eine quasi wachsende Torte, die schlussendlich mit brennenden Kerzen versehen ist, dargestellt werden.

Figur 33 zeigt die Möglichkeit der Darstellung eines Gesichts, dessen Gesichtszüge sich vom Weinen zum Lachen oder umgekehrt verändern können. Die einzelnen Bildsequenzen tragen hier die Ordnungsnummern "19", "20", "21", "22", "23".

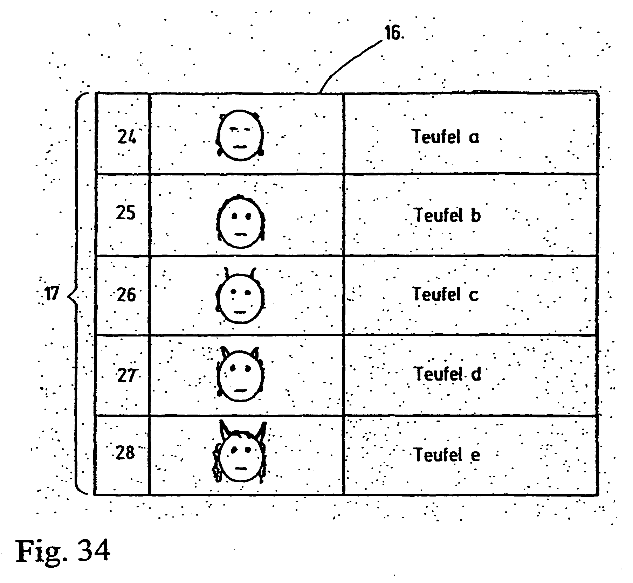

Gemäß Figur 34 kann den Ordnungsnummern "24", "25", "26", "27" und "28" eine sich von einem Gesicht zu einem Teufel verändernde Bildsequenz zugeordnet sein.

Figur 35 zeigt schließlich als Möglichkeit die Darstellung einer Blume, die in den einzelnen Bildsequenzen jeweils ein Blütenblatt verliert und gemäß der an sich bekannten "Flirtspiele" den Untertext "er/sie liebt mich", "er/sie liebt mich nicht" beziehungsweise "er/sie liebt mich doch" tragen kann.

Nach weiteren Ausführungsbeispielen können als bewegte Bilder beispielsweise eine lachende und/oder weinende Sonne, ein Haus mit qualmendem Schornstein in mehreren, jedenfalls wenigstens zwei Bildsequenzen umfassenden bewegten Darstellungen gesendet beziehungsweise empfangen werden. Diese Aufzählung ist selbstverständlich nicht komplett und abschließend. Jede erdenkliche, insbesondere in schematisierter Darstellung mögliche Bilddarstellung kann nach dem erläuterten Verfahren als bewegtes Bild übertragen werden.

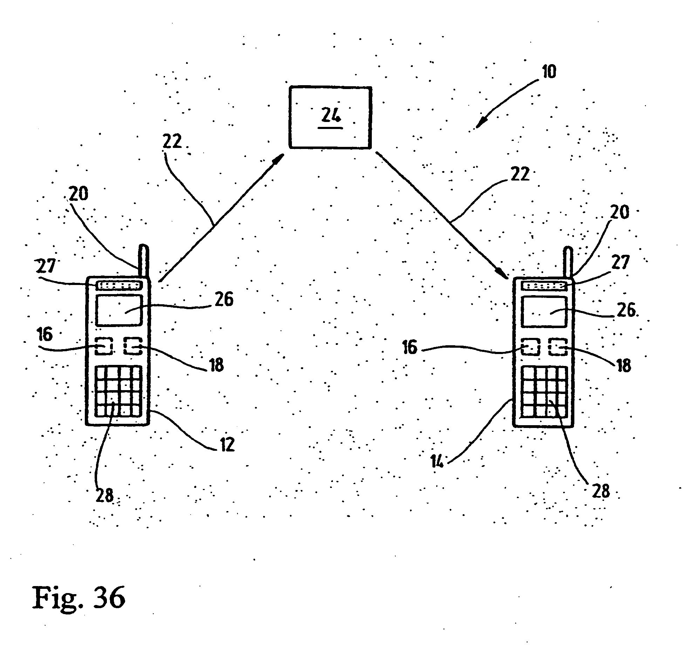

Figur 36 zeigt schematisch eine Anordnung 10 zum Übermitteln von bewegten Bildern mit musikalischer Untermalung von einem Sender 12 zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über eine entsprechende Ausstattung verfügen. Bei dem nachfolgenden Ausführungsbeispiel wird davon ausgegangen, dass es sich bei dem Sender 12 und dem Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 einer sich im Besitz des Empfängers 14 befindenden Person eine musikalisch untermalte bewegte Bildinformation senden möchte. Die Bedienperson des Senders 12 ruft hierzu - in später noch zu erläuternder Weise - aus einem Speichermittel 16 eine Abfolge von Bildsequenzen (später auch Symbole genannt), die in zeitlich versetzter Darstellung ein bewegtes Bild ergeben, auf. Zusätzlich kann, muss jedoch nicht, eine Information aufgerufen werden, die beim Empfänger neben der Darstellung der bewegten Bilder die Wiedergabe wenigstens einer Tonfolge auslöst.

Sendeseitig werden die Folge von wenigstens zwei zusammengehörigen, nicht identischen Symbolen und gegebenenfalls die Auslöseinformation der wiederzugebenden Tonfolge, mittels eines Mikroprozessors 18 aufbereitet und über eine Sende- und Empfangseinrichtung 20 als Kurzmitteilung 22 einem Diensteanbieter 24 übermittelt. Diensteanbieter 24 sind beispielsweise Betreiber von Mobilfunksystemen, wie beispielsweise C-Netze, D-Netze, E-Netze oder dergleichen. Das Senden einer Kurzmitteilung 22 über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird die die Folge der Bildsequenzen und gegebenenfalls die die Tonfolge wiedergebende Auslöseinformation repräsentierende Kurzmitteilung 22 dem Empfänger 14 übermittelt. Der Empfänger 14 erkennt - in ebenfalls noch zu erläuternder Weise - dass es sich bei der Kurzmitteilung 22 um die Darstellung bewegter Bilder mit musikalischer Untermalung handelt. Bei Aufruf der Kurzmitteilung 22 durch den Empfänger 14, was notwendigerweise nicht sofort, sondern auch zu einem späteren Zeitpunkt erfolgen kann, wird durch Erkennen der Bildfolge durch den Empfänger 14 durch einen ebenfalls vorgesehenen Mikroprozessor 18, der mit einem Speichermittel 16 zusammenwirkt, auf einer Anzeigeeinrichtung 26 die entsprechende Anzahl der Bildsequenzen zeitlich aufeinander folgend dargestellt, so dass für den Betrachter ein bewegtes Bild entsteht. Gleichzeitig wird über einen Lautsprecher 27 die den bewegten Bildern zugeordnete Tonfolge als Melodie, gegebenenfalls mit Gesang, wiedergegeben.

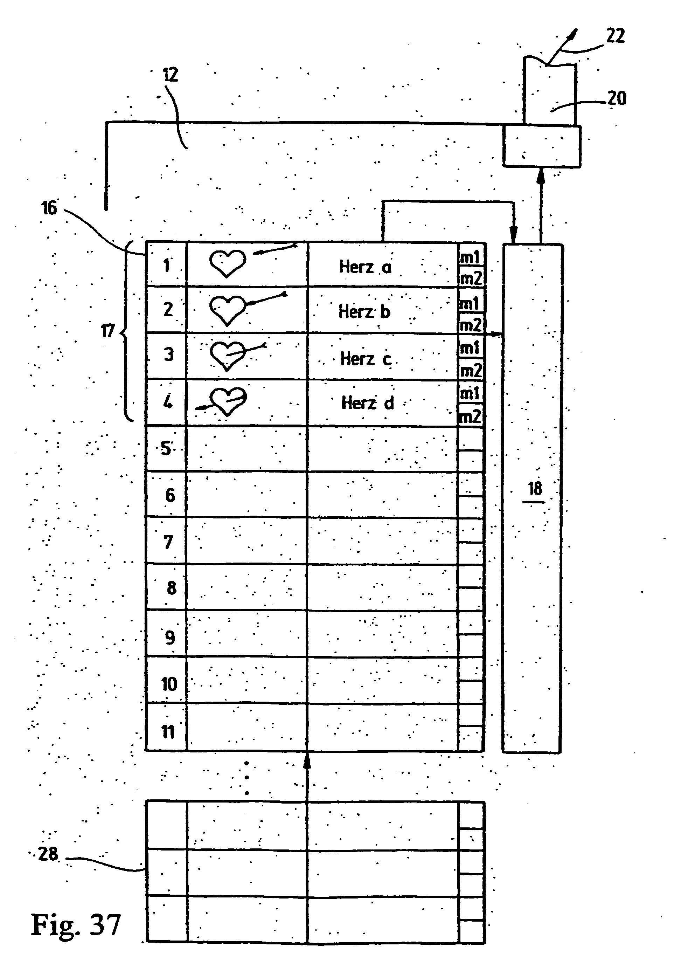

Figur 37 verdeutlicht in schematischer Blockschaltbilddarstellung das Senden von bewegten Bildern mit musikalischer Untermalung. Gleiche Teile wie in Figur 36 sind mit gleichen Bezugszeichen versehen und nicht nochmals erläutert. Über eine Bedieneinrichtung 28, die beispielsweise von einer alphanumerischen Tastatur gebildet ist, können auf der Anzeigeeinrichtung 26 die bestehenden Möglichkeiten des Sendens von bewegten Bildern mit musikalischer Untermalung dargestellt werden. Diese Darstellung kann beispielsweise menügeführt erfolgen, indem durch Betätigen entsprechender Tasten der Bedieneinrichtung 28 die bestehenden Möglichkeiten einzeln, nacheinander oder zusammenhängend dargestellt werden. Bei dem erläuterten Ausführungsbeispiel wird davon ausgegangen, dass als bewegtes Bild ein sich einem Herz nähernder Pfeil übertragen werden soll. Dieses bewegte Bild ist beispielsweise in vier Bildsequenzen zerlegt, die im Speichermittel 16 unter Ordnungsnummern "1", "2", "3" und "4" abgelegt sind. Die einzelnen Bildsequenzen jeweils für sich betrachtet stellen eine Phase des Anfluges des Pfeiles auf das Herz dar. Jeder der Bildsequenzen, die quasi einem Bildsymbol entspricht, ist ein sprachlicher Ausdruck (Zeichenfolge) zugeordnet. Diese Zuordnung ist beispielsweise in der schematisch dargestellten tabellarischen Form im Speichermittel 16 abgelegt. Der Bildsequenz "1" ist beispielsweise der sprachliche Ausdruck "Herza" zugeordnet. Der Bildsequenz "2" ist der sprachliche Ausdruck "Herzb", der Bildsequenz "3" der sprachliche Ausdruck "Herzc" und der Bildsequenz "4" der sprachliche Ausdruck "Herzd" zugeordnet.

Im Speichermittel 16 erfolgt ferner eine Zuordnung von die bildlichen Darstellungen untermalenden Tonfolgen (Musik). Hierbei ist beispielsweise jeder Bildsequenz eine Auswahl von zwei möglichen Tonfolgen "m1" beziehungsweise "m2" zugeordnet. Jedes dieser Kurzzeichen "m1" beziehungsweise "m2" löst die Wiedergabe einer bestimmten zugeordneten Tonfolge mit Übertragung der bewegten Bilder beim Empfänger - wie nachfolgend noch erläutert - aus. Gemäß dem dargestellten Beispiel ist die Tonfolge "m1" oder "m2" wählbar. Nach weiteren Ausführungsbeispielen kann auch lediglich eine Tonfolge "m" oder eine Vielzahl von Tonfolgen "m1" bis "mx" pro Bildsequenz oder pro Block 17 von zusammengehörenden Bildsequenzen zugeordnet sein.

Soll nunmehr vom Sender 12 dieser das Herz anfliegende Pfeil als bewegtes Bild mit musikalischer Untermalung einem Empfänger 14 übertragen werden, wird über den Mikroprozessor 18 die Sende- und Empfangseinheit 20 derart angesteuert, dass als Kurzmitteilung die Zeichenfolge "HerzaHerzbHerzcHerzdm1" gesendet wird.

Empfängerseitig wird diese Kurzmitteilung von der dort vorhandenen Sende- und Empfangseinrichtung 20 dem dortigen Mikroprozessor 18 übermittelt, der durch Einlesen in dem dort ebenfalls vorhandenen Speichermittel 16 einerseits die zugehörigen Bildsymbole (Bildsequenzen) und die zugehörige Tonfolge ermittelt. Durch Ansteuerung der Anzeigeeinrichtung 26 und des Lautsprechers 27 beim Empfänger 14 kann dann zeitlich aufeinander folgend die Darstellung der Bildsequenzen "1", "2", "3" und "4" erfolgen und gleichzeitig die der Zeichenfolge "m1" entsprechende Tonfolge (Musik) abgespielt werden. Für den Betrachter der empfängerseitigen Anzeigeeinrichtung 20 ergibt sich somit als bewegliches Bild der anfliegende Pfeil auf das Herz und gleichzeitig der Hörempfang der zugeordneten Melodie. Die Melodie als solche kann aus einer beliebigen Tonfolge, die zuvor festgelegt und in dem Speichermittel 16 des Empfängers abgespeichert ist, bestehen. Als Tonfolgen kommen hierbei einfache aufeinander folgende Töne, komplexe Melodien und/oder mit Gesang verbundene Melodien in Betracht. Als konkretes Beispiel könnte beispielsweise bei der Darstellung des auf das Herz anfliegenden Pfeils als Melodie der "Hochzeitsmarsch" intoniert werden.

Zur Vereinfachung der Übertragung kann vorgesehen sein, dass bei Auswahl der Ordnungsnummer "1" im Sender 12 automatisch alle zu einem Block 17 gehörenden Bildsequenzen, beispielsweise die Bildsequenzen mit den Ordnungsnummern "1", "2", "3" und "4", sowie eine zugehörige Tonfolge, beispielsweise die Tonfolge "m1", aufgerufen und zum Empfänger 14 gesendet werden.

Um eine zu übertragende Datenmenge weiter zu reduzieren, kann vorgesehen sein, dass bei Aufrufen der Ordnungsziffern "1", "2", "3" und "4" über den Mikroprozessor 18 automatisch erkannt wird, dass vier aufeinander folgende zusammengehörende (zu einem Block 17 gehörende), an sich lediglich geringfügig unterschiedliche Bildsymbole (Bildsequenzen) mit einer zugehörigen Tonfolge übertragen werden sollen. Hieraus kann als Kurzmitteilung dann eine verkürzte Mitteilung derart erfolgen, dass lediglich die Kurzmitteilung beispielsweise lautet "Herzabcdm1". Die Kurzmitteilung besteht somit aus einem die gesamte Bildfolge kennzeichnenden Stamm "Herz" und den einzelnen Bildsequenzen entsprechenden Zuordnungen "abcd" und einer der Tonfolge entsprechenden Zuordnung "m1". Es wird deutlich, dass diese zu übertragende Kurzmitteilung 22 weniger Daten benötigt, als die oben erwähnte Aneinanderreihung der einzelnen Bildsequenzen mit der wenigstens einen Tonfolge. Empfängerseitig erfolgt dann über den dort vorgesehenen Mikroprozessor 18 eine entsprechende Rückwandlung und Darstellung auf der Anzeigeeinrichtung 26 und Wiedergabe über den Lautsprecher 27.

Um die Kurzmitteilung 22 für den Empfänger als Übermittlung zusammengehörender Bildsequenzen mit einer Tonfolge zu kennzeichnen, kann zusätzlich eine Kennzeichnung, beispielsweise mit der Taste "#" erfolgen, so dass die Kurzmitteilung dann aus der Zeichenfolge nach Variante 1 "HerzaHerzbHerzcHerzdml#" oder nach der bevorzugten Kurzvariante 2 "Herzabcdm1#" besteht.

Selbstverständlich ist es für den Sender 12 auch möglich, aus einem zusammengehörenden Block 17 von Bildsequenzen auch nur einzelne, beispielsweise zwei Bildsequenzen auszuwählen, die dann als Kurzmitteilung übertragen werden. Beispielsweise können aus dem Block der Ordnungsnummern "1", "2", "3" und "4" die Ordnungsnummern "2" und "4" ausgewählt werden, so dass als Kurzmitteilung dann entweder "HerzbHerzdm1#" oder "Herzbdm1#" übermittelt wird. Entsprechend einer tatsächlich vorhandenen Anzahl von zusammengehörenden Bildsequenzen ergeben sich hierdurch unterschiedliche Möglichkeiten der Übertragung aus mehreren einzelnen Bildsequenzen bestehender bewegter Bilder mit der der Folge "m1" zugeordneten musikalischen Untermalung.

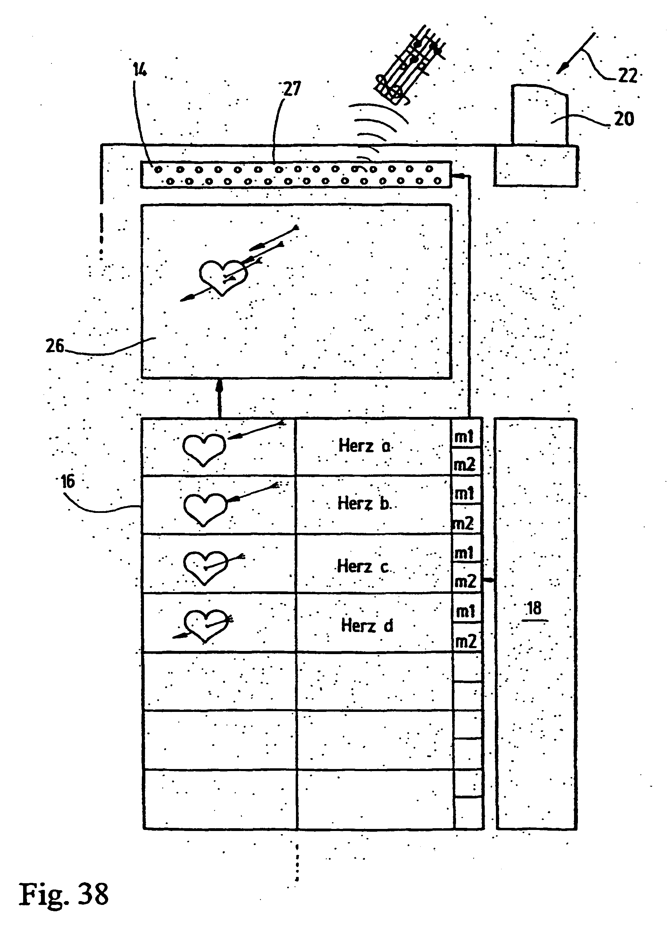

Figur 38 verdeutlicht nochmals schematisch den Empfang der Kurzmitteilung 22 beim Empfänger 14. Durch die Sende- und Empfangseinrichtung 20 erhält der Mikroprozessor 18 die Kurzmitteilung 22 und übermittelt diese der Speichereinheit 16. Durch die eindeutige Zuordnung der sprachlichen Ausdrücke zu den Bildsequenzen beziehungsweise der Zeichenfolge "m" zu den Tonfolgen lässt sich entsprechend der empfangenen Kurzmitteilung 22 auf der Anzeigeeinrichtung 26 die zeitliche Abfolge der einzelnen Bildsequenzen darstellen und gleichzeitig über den Lautsprecher 27 die zugeordnete Tonfolge wiedergeben.

Bei dem gewählten Beispiel ist das "Herz" als konstanter identischer Bildteil nur einmal darzustellen, während der anfliegende "Pfeil" in seinen vier Flugphasen entsprechend den Ordnungsnummern "1", "2", "3" und "4", die sendeseitig vergeben sind, alternierend dargestellt wird. In der Anzeigeeinrichtung 26 in Figur 3 sind schematisch die vier Flugphasen des Pfeiles angedeutet, die selbstverständlich nacheinander dargestellt werden. Für den Betrachter der Anzeigeeinrichtung 26 ergibt sich dadurch der dem Herz sich nähernde Pfeil, der gleichzeitig durch die über den Lautsprecher 27 intonierte Musik untermalt ist.

Die Mikroprozessorschaltung 18 kann eine Schleifenschaltung aufweisen, wonach die als Kurzmitteilung 22 übermittelten und über die Speichereinheit 16 in die Bildsequenzen beziehungsweise die Tonfolgen gewandelten Informationen fortlaufend wiederholend dargestellt beziehungsweise wiedergegeben werden. Dies kann erfolgen, bis von einer Bedienperson am Empfänger 14 die Darstellung beziehungsweise die Wiedergabe unterbrochen beziehungsweise abgebrochen wird.

Das empfängerseitige Aufrufen der Kurzmitteilung 22 und somit das Darstellen der bewegten Bilder und Wiedergeben der Tonfolgen kann entweder sofort nach Empfang der Kurzmitteilung 22 oder auch später erfolgen. Hierzu erfolgt eine entsprechende Zwischenspeicherung, bis von der Bedienperson des Empfängers 14 das Abrufen erfolgt.

Bei dem erläuterten Ausführungsbeispiel ist davon ausgegangen worden, dass sendeseitig dem Block 17 bereits eine Tonfolge "m1" beziehungsweise "m2" zugeordnet ist. Es kann auch vorgesehen sein, dass empfangsseitig eine Tonfolge "m1", "m2" oder eine andere Tonfolge "mx" automatisch bei Empfang der Kurzmitteilung 22 aufgerufen und über den Lautsprecher 27 wiedergegeben wird. Hierdurch erübrigt sich das sendeseitige Zuordnen einer bestimmten Tonfolge.

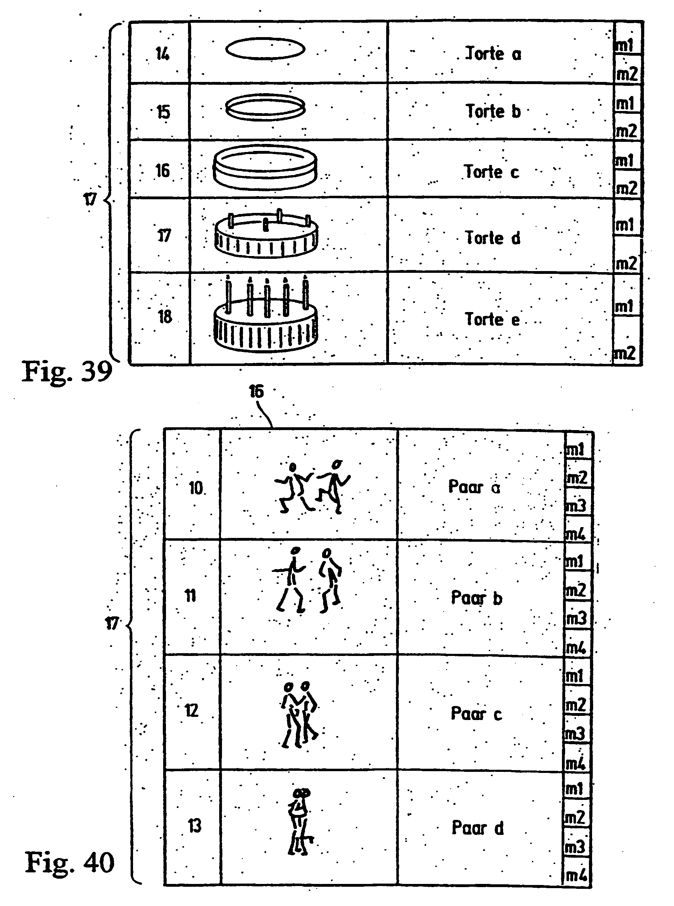

In den Figuren 39 und 40 sind weitere Ausführungsbeispiele dargestellt, die unterschiedliche Bildsequenzen für die Übertragung von bewegten Bildern mit gleichzeitigem Wiedergeben wenigstens einer Tonfolge betreffen. Dargestellt ist jeweils schematisch das Speichermittel 16, wobei zusammengehörende Bildsequenzen jeweils in einem Block 17 mit den zugehörigen Ordnungsnummern gezeigt sind. Hinsichtlich des Aufrufes und Sendens der in den Figuren 39 und 40 beispielhaft dargestellten Bildsequenzen mit zugeordneten Tonfolgen wird auf die Beschreibung zu den Figuren 36 bis 38 verwiesen. Gemäß Figur 39 kann vorgesehen sein, dass ein bewegtes Bild in der Darstellung einer Geburtstagstorte aus beilspielsweise insgesamt fünf Bildsequenzen besteht. Hierbei sind jeweils wieder die Folgen "m1" beziehungsweise "m2" für die Definition der zugehörigen Tonfolgen genannt. Eine vom Sender 12 zum Empfänger 14 übermittelte Kurzmitteilung 22 könnte demnach lauten "TorteaTortebTortecTortedTorteem2" beziehungsweise nach der Kurzvariante "Torteabcdem2".

Ein weiteres Beispiel zeigt Figur 40, wobei das bewegte Bild aus vier Bildsequenzen besteht, die ein sich annäherndes, beispielsweise tanzendes Paar darstellen. Anhand dieses Ausführungsbeispiels ist verdeutlicht, dass den bewegten Bildern auch mehr als zwei, nämlich hier vier verschiedene Tonfolgen "m1", "m2", "m3" beziehungsweise "m4" zugeordnet sein können. So kann beispielsweise durch Auswahl einer bestimmten dieser Tonfolgen eine unterschiedliche Melodie, beispielsweise ein unterschiedlicher Tanzrhythmus, wie beispielsweise Walzer, Tango, Foxtrott oder dergleichen, definiert sein.

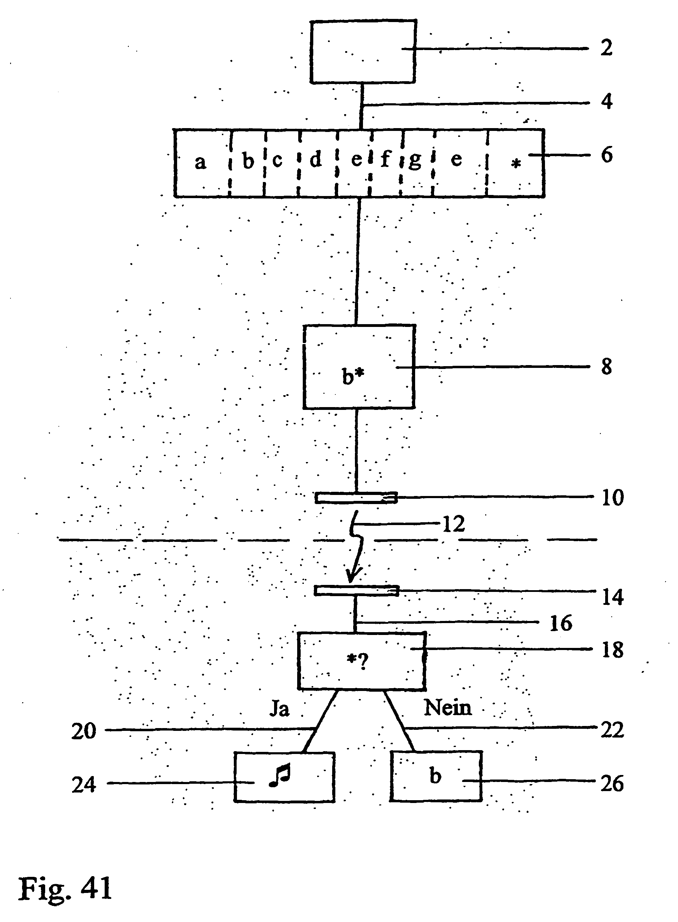

Die in Figur 41 dargestellte beispielhafte Vorrichtung weist einen Speicher 2 auf. Der Speicher 2 ist über eine elektrische Leitung 4 mit einem als erfindungsgemäßes Auswahlmittel dienenden Touch-Screen 6 verbunden. Weiterhin ist der Speicher 2 über eine nicht dargestellte elektrische Leitung mit einem Mikroprozessor 8 verbunden.

Auf dem Touch-Screen 6 sind in der Figur 41 die Buchstaben a-e dargestellt. Diese Buchstaben sind jeweils auf getrennten Feldern, die hier der Einfachheit halber ebenfalls mit a-e bezeichnet werden, auf dem Touch-Screen 6 angeordnet. Ein Benutzer der dargestellten Vorrichtung kann daher mit Hilfe des Touch-Screens 6 einen Buchstaben auf dem Touch-Screen 6 durch Antippen des entsprechenden Feldes auswählen.

Weiterhin ist auf dem Touch-Screen 6 ein "*" dargestellt. Dieses "*" ist ebenfalls auf einem gesonderten Segment des Touch-Screens 6 dargestellt. Dieses "*" stellt eine Wahlmöglichkeit zwischen zwei Modi der dargestellten Vorrichtung dar. Wählt der Benutzer der Vorrichtung auf dem Touch-Screen 6 das Feld "*" an, so werden alle folgenden Auswahlen des Benutzers von Buchstaben auf dem Touch-Screen 6 als Auswahl eines Tones von dem Mikroprozessor 8 aufgefasst. Der Mikroprozessor 8 fügt dann dem ausgewählten Buchstaben ein entsprechendes Kennzeichen, um es als ein Tonsignal verkörperndes Zeichen beziehungsweise als einen ein Tonsignal verkörpernden Buchstaben zu kennzeichnen. In der Figur ist daher der Mikroprozessor 8 schematisch mit der Zeichenkombination "b*" versehen. Dies soll symbolisieren, dass der Mikroprozessor 8 durch die Anwahl des Zeichens "*" auf dem Touch-Screen 6 durch den Benutzer in den Modus versetzt wurde, in welchem Modus er automatisch jedes auf dem Touch-Screen 6 angewählte Zeichen beziehungsweise jeden auf dem Touch-Screen 6 ausgewählten Buchstaben als ein Tonsignal verkörpernden Buchstaben auffasst, und somit automatisch jedem von dem Benutzer auf dem Touch-Screen 6 ausgewählten Buchstaben eine entsprechende Kennung, in der dargestellten Ausführungsform ebenfalls ein "*", anhängt.

Weiterhin zeigt die Figur 41 einen Sender 10. Mit Hilfe des Senders 10, welcher eine nicht dargestellte Antenne zum Senden elektromagnetischer Wellen aufweist, lassen sich die von dem Mikroprozessor 8 digitalisierten Zeichenfolgen, in dem dargestellten Beispiel die Zeichenfolge "b*", als Modulation einer elektromagnetischen Welle versenden. Dieses Versenden ist durch den Pfeil 12 symbolisiert.

Soll mit Hilfe der dargestellten Vorrichtung ein Tonsignal verschickt werden, so wird zunächst die dargestellte Vorrichtung mit Hilfe eines nicht dargestellten Schalters mit einer nicht dargestellten Stromversorgung verbunden. Die nicht dargestellte Stromversorgung versorgt den Speicher 2, den Touch-Screen 6, den Mikroprozessor 8 und den Sender 10. Nach dem Einschalten der Vorrichtung aktiviert der Mikroprozessor 8 automatisch einen Abrufvorgang, welcher Abrufvorgang aus dem Speicher 2 über die Leitung 4 Buchstaben a-e auf dem Touch-Screen 6 darstellt. Wählt nun der Benutzer auf dem Touch-Screen 6 den Modus "*", so signalisiert der Benutzer somit dem Mikroprozessor 8, dass er (der Benutzer) im Folgenden Tonsignale mit Hilfe der Vorrichtung verschicken will. Wählt nun wiederum anschließend der Benutzer auf dem Touch-Screen 6 den entsprechenden Buchstaben, in der dargestellten Figur den Buchstaben b, so wird diese auf dem Touch-Screen 6 erfolgte Auswahl von dem Mikroprozessor 8 mit der Kennzeichnung "*" versehen und über den Sender 10 abgeschickt.

Empfangsseitig ist in der Figur 41 ein dem Sender 10 komplementärer Empfänger 14 dargestellt. Der Empfänger 14 ist über eine elektrische Leitung 16 mit einem zweiten Mikroprozessor 18 verbunden. Der Mikroprozessor 18 ist wiederum über Leitungen 20 und 22 mit einem Lautsprecher 24 und einer Flüssigkristallanzeige 26 verbunden.

Erkennt der Mikroprozessor 18, welcher ebenfalls durch einen nicht dargestellten Schalter mit einer nicht dargestellten Stromversorgung verbunden werden kann, dass der Empfänger 14 eine mit einem "*" versehene Information, in dem dargestellten Beispiel einen entsprechend gekennzeichneten Buchstaben "b", empfangen hat (dieses Erkennen ist in der Figur durch das in dem Mikroprozessorfeld 18 dargestellte Fragezeichen hinter dem Zeichen "*" schematisch symbolisiert), so aktiviert der Mikroprozessor 18 über die Leitung 20 den Lautsprecher 24 und gibt den dem Buchstaben b entsprechenden Ton über den Lautsprecher 24 wieder. Somit bedeutet das in der Figur 41 wiedergegebene "Ja" neben der elektrischen Leitung 20, dass der Mikroprozessor 18 die Frage, ob das empfangene Zeichen mit dem einen Ton kennzeichnenden Kennzeichen "*" versehen war, mit Ja, so dass anschließend der Lautsprecher 24 aktiviert wird. Beantwortet im anderen Fall, das heißt in dem Fall, in dem das empfangene Zeichen kein Kennzeichen "*" trug, der Mikroprozessor 18 die entsprechende Frage mit Nein, so wird die Leitung 22 aktiviert und der Buchstabe selbst auf einer Flüssigkristallanzeige 26 wiedergegeben.

Bei der oberhalb der gestrichelten Linie in der Figur 41 dargestellten Vorrichtung kann es sich beispielsweise um ein sendendes Mobiltelefon handeln, während es sich bei der unterhalb der gestrichelten Linie in der Figur dargestellten Vorrichtung um ein empfangendes Mobiltelefon handeln kann. Auch kann es sich bei der oberhalb der gestrichelten Linie dargestellten Vorrichtung um einen Computer handeln, beispielsweise einen Personalcomputer, während es sich bei der unterhalb der gestrichelten Linie dargestellten Vorrichtung ebenfalls um einen Personalcomputer handeln kann, wobei beide Computer über eine Telefonleitung 12 miteinander verbunden sind.

Die dargestellten Ausführungsbeispiele sind selbstverständlich lediglich beispielhaft. So kann jede erdenkliche, insbesondere in schematisierter Darstellung mögliche Bilddarstellung nach dem erläuterten Verfahren als bewegtes Bild übertragen werden und eine beliebige Zuordnung einer Tonfolge erfolgen.

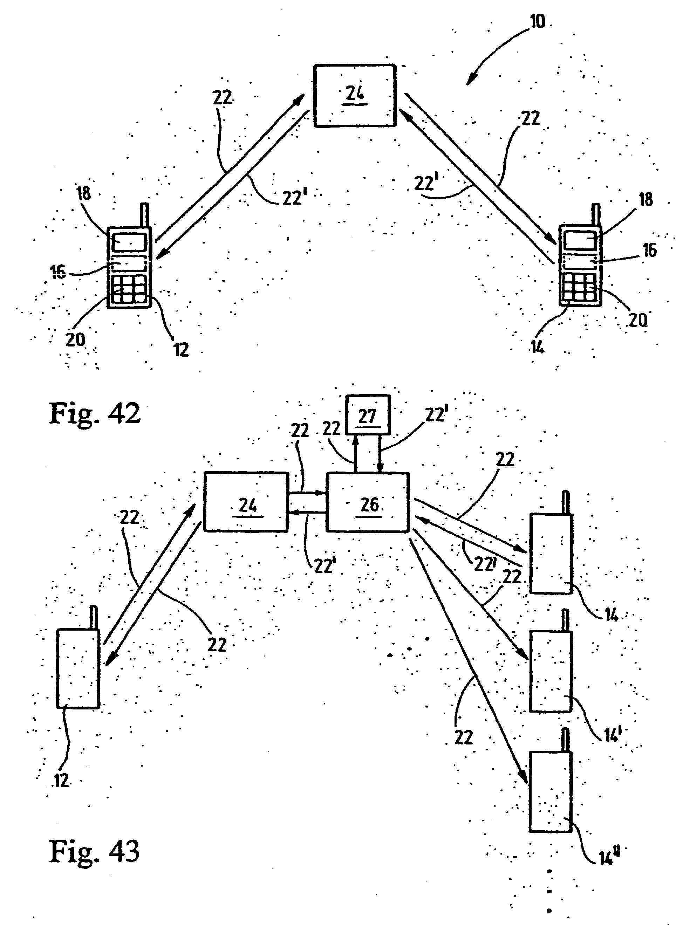

Figur 42 zeigt eine Anordnung 10 zum Übermitteln von Spielinformationen von einem Sender 12 zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über ein entsprechendes Display verfügen. Bei den nachfolgenden Ausführungsbeispielen wird davon ausgegangen, dass es sich bei Sender 12 und Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 und eine Bedienperson des Empfängers 14 darüber einig sind, ein Spiel zu beginnen. Die Bedienperson des Senders 12 ruft hierzu - in später noch zu erläuternder Weise - aus einem Speichermittel 16 eine Spielmaske auf, die auf einer Anzeigeeinrichtung 18, die beispielsweise von einem Display gebildet ist, angezeigt wird. Über ein alphanumerisches Bedienfeld 20 wird dann von der Bedienperson des Senders 12 eine gewünschte Spielaktion, beispielsweise das Setzen einer Schachfigur, ausgewählt und als Kurzmitteilung 22 einem Diensteanbieter 24 übermittelt. Diensteanbieter 24 sind beispielsweise Betreiber von Mobilfunksystemen, wie beispielsweise C-Netze, D-Netze, E-Netze oder dergleichen. Das Senden einer Kurzmitteilung 22 über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird diese Kurzmitteilung 22 dem Empfänger 14 übermittelt. Der Empfänger 14 erkennt - in ebenfalls noch zu erläuternder Weise - dass es sich bei der Kurzmitteilung 22 um eine Spielaktion des Senders 12 handelt. Bei Aufruf der Kurzmitteilung 22 durch den Empfänger 14, was notwendigerweise nicht sofort, sondern zu einem späteren Zeitpunkt erfolgen kann, wird durch Erkennen der Spielaktion durch den Empfänger 14 durch ein ebenfalls vorgesehenes Speichermittel 16 auf der Anzeigeeinrichtung 18 die entsprechende Spielmaske angezeigt und in der Spielmaske die gewünschte Spielaktion visualisiert. Die Bedienperson des Empfängers 14 kann nunmehr auf die Spielaktion des Senders 12 mit einer eigenen Spielaktion, beispielsweise das Setzen einer Schachfigur, reagieren. Hierzu wird die vom Empfänger gewünschte Spielaktion über die alphanumerische Tastatur 20 des Empfängers 14 eingegeben und als Kurzmitteilung 22' über den Diensteanbieter 24 dem Sender 12 übermittelt. Bei dieser Rückantwort sind Funktionen zwischen Sender und Empfänger quasi ausgetauscht. Durch das gegenseitige Senden der Kurzmitteilungen 22 beziehungsweise 22' kann somit zwischen dem Sender 12 und dem Empfänger 14 ein Spiel, beispielsweise ein Schachspiel, über einen längeren Zeitraum durchgeführt werden. Der aktuelle Spielstand wird in den jeweiligen Speichermitteln 16 abgespeichert, so dass das Spiel auch unterbrochen werden kann. Eine Fortsetzung des Spiels ist jederzeit entweder durch den Sender 12 oder den Empfänger 14 durch Übermitteln der nächsten fälligen Spielaktion als Kurzmitteilung 22 beziehungsweise 22' möglich.

Anhand von Figur 43 soll ein weiterer Verfahrensablauf zum Übermitteln von Spielinformationen von einem Sender 12 zu wenigstens einem Empfänger 14, 14' und/oder 14" verdeutlicht werden. Bei dem in Figur 42 gezeigten Ausführungsbeispiel war davon ausgegangen worden, dass zwischen Sender 12 und Empfänger 14 Einigkeit darüber bestand, ein Spiel zu beginnen. Figur 43 verdeutlicht den Fall, dass ein Sender 12 ein Spiel aufnehmen will, jedoch momentan keinen Empfänger 14 als Spielpartner zur Verfügung hat. Die Spielaufnahme erfolgt, wie bereits zu Figur 42 erläutert, durch Senden einer Kurzmitteilung 22 an den Diensteanbieter 24. Dieser übermittelt diese Kurzmitteilung 22 an eine Agentur 26, der eine Vielzahl potentieller Empfänger 14, 14', 14" bekannt sind, die spielinteressiert sind. Die Kurzmitteilung 22 des Senders 12 kann nunmehr von der Agentur 26 an jeden der potentiellen Empfänger 14 gesendet werden. Hierbei kann vorgesehen sein, dass die Kurzmitteilung 22 an alle potentiellen Empfänger 14 gesendet wird oder die Empfänger 14 zuvor der Agentur 26 mitgeteilt haben, dass sie auf den Empfang einer eine Spielaktion beinhaltenden Kurzmitteilung 22 eines beliebigen Senders 12 warten.

Nachdem die Kurzmitteilung 22 an alle potentiellen Empfänger 14 gesandt wurde, wird von der Spielagentur 26 abgewartet, welcher der potentiellen Empfänger 14 als erstes eine Kurzmitteilung 22' sendet und somit die Bereitschaft zur Spielaufnahme signalisiert. Hierbei kann die Kurzmitteilung 22' sofort eine Spielaktion in Reaktion auf die Spielaktion des Senders 12 beinhalten. Alle weiteren potentiellen Empfänger 14 werden dann nicht mit in das Spiel aufgenommen. Im gezeigten Beispiel in Figur 43 wird davon ausgegangen, dass der Empfänger 14 als erster die Kurzmitteilung 22' zur Spielaufnahme sendet.

Denkbar sind auch Varianten, dass über die Agentur 26 mehrere Empfänger 14 als Spielpartner vermittelt werden. Hier können insbesondere Spiele realisiert werden, die mehr als zwei Mitspieler gestatten. Dies kann beispielsweise "Halma", "Mensch ärgere dich nicht" oder dergleichen sein. Über die Agentur 26 und den Dienstanbieter 24 werden dann die entsprechenden Kurzmitteilungen 22 beziehungsweise 22' allen zur Konferenzschaltung zusammengeschlossenen Sendern 12 beziehungsweise Empfängern 14 mitgeteilt. Über die Agentur 26 wird dann auch die Reihenfolge der Sendung von Kurzmitteilungen 22 beziehungsweise 22' der einzelnen am Spiel beteiligten Sender 12 beziehungsweise Empfänger 14 überwacht und gesteuert.

Es ist auch möglich, dass der Agentur 26 ein Spielcomputer 27 zugeordnet ist, der bei Bedarf das Spiel mit dem Sender 12 aufnimmt. Dies kann beispielsweise der Fall sein, wenn keiner der Empfänger 14, 14', 14" spielbereit, spielwillig oder dergleichen ist.

Nach einer weiteren Variante ist es möglich, dass bei Spielaufnahme durch den Sender 12 dieser mit mehreren Empfängern 14, 14', 14" verbunden wird, so dass der Sender 12 simultan mit mehreren Empfängern 14 Spielinformationen austauschen kann. Hier kann beispielsweise "Simultanschach" zwischen dem Sender 12 und den einzelnen Empfängern 14 gespielt werden. Der Sender 12 hat hierzu in seinem Speicherelement 16 die den einzelnen Empfängern 14, 14', 14" zugeordneten Spielmasken gespeichert und ruft nach Erhalt der jeweiligen Kurzmitteilung 22' von einem der Empfänger 14, 14' oder 14" die zugehörige Spielmaske in die Anzeigeeinrichtung 18 auf. Anhand der bei Kurzmitteilungen üblicherweise übersandten Sendeerkennung (vom Diensteanbieter zugeordnete Rufnummer) ist in einfacher Weise eine Zuordnung der einzelnen Empfänger 14, 14', 14" zu dem Sender 12 möglich, so dass Vermischungen der Spiele untereinander ausgeschlossen sind.

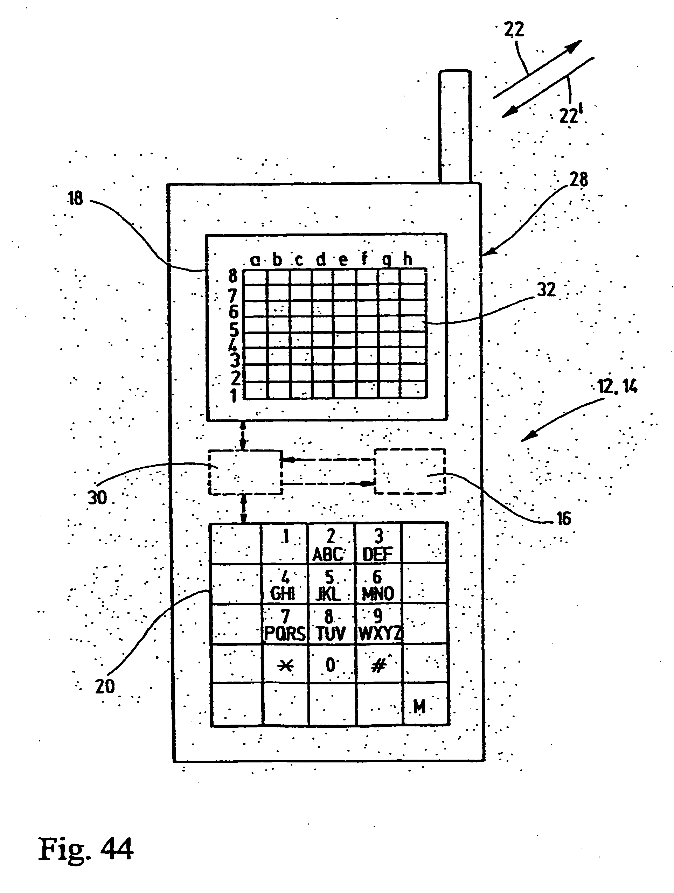

Figur 44 zeigt schematisch ein Mobiltelefon 28, das als Sender 12 und/oder Empfänger 14 mittels der anhand der Figuren 42 und 43 erläuterten Ausführungsbeispiele genutzt werden kann. Das Mobiltelefon 28 besitzt die Anzeigeeinrichtung 18, die alphanumerische Tastatur 20, einen integrierten Mikroprozessor 30 sowie die Speichermittel 16. Ferner ist eine nicht dargestellte Energieversorgung vorgesehen. Dies ist beispielsweise ein aufladbarer Akkumulator. Die Anordnung der einzelnen Elemente ist lediglich beispielhaft und kann selbstverständlich auch anders sein. Die Tastatur 20 besitzt beispielsweise eine Menütaste M, über die in dem Speicherelement 16 abgespeicherte Spiele menügeführt aufgerufen werden können. Hierbei können mehrere Spiele, beispielsweise "Schach", "Halma", "Dame", "Schiffe versenken", "Leiterspiel", "Glückspyramide", "Domino", "Pachisi®", "Mensch ärgere dich nicht" oder dergleichen abgespeichert sein. Entsprechend der Auswahl eines der Spiele durch eine Bedienperson wird auf der Anzeigeeinrichtung 18 eine entsprechende Spielmaske 32 dargestellt. Im vorliegenden Beispiel wird davon ausgegangen, dass mittels der Bedienperson Schach gespielt werden soll, so dass in der Anzeige 18 die Spielmaske "Schach" dargestellt ist. Zur Vereinfachung sind in Figur 44 nur die Umrisse mit den einzelnen Zuordnungen der Buchstaben a bis h beziehungsweise Ziffern 1 bis 8 dargestellt. Die Darstellung der Schachfiguren selber erfolgte aus Gründen der Übersichtlichkeit nicht. Die Darstellung auf der Anzeigeeinrichtung 18 kann beispielsweise figürlich erfolgen. Zur Vereinfachung kann jedoch auch vorgesehen sein, für die einzelnen Schachfiguren eine Buchstabenzuordnung zu treffen, beispielsweise "B" für Bauer, "T" für Turm, "S" für Springer, "L" für Läufer, "D" für Dame und "K" für König. Zur Unterscheidung zwischen schwarzen und weißen Spielsteinen kann ein zusätzliches Merkmal, beispielsweise ein "•" oder dergleichen erfolgen. Auch kann vorgesehen sein, für die einzelnen Schachfiguren eine Farbzuordnung zu treffen. Insbesondere bei Farbdisplays an Mobiltelefonen kann so in vereinfachter Weise eine Spieldarstellung erfolgen. Zur Unterscheidung der schwarzen und weißen Spielsteine können unterschiedliche Farbintensitäten zur Verfügung stehen.

Entsprechend der Menüführung wird durch den Mikroprozessor 30 aus dem Speicherelement 16 die entsprechende Spielmaske 32 abgerufen und angezeigt. Der Mikroprozessor 30 ist hierzu, wie gestrichelt in Figur 44 angedeutet, mit dem Speicherelement 16 sowie der Anzeigeeinrichtung 18 und der alphanumerischen Bedientastatur 20 verbunden. Das Mobiltelefon 28 umfasst ferner hier nicht im Einzelnen dargestellte Sende- und Empfangseinrichtungen, mittels denen neben den üblichen Funktionen auch die Kurzmitteilungen 22 gesendet beziehungsweise Kurzmitteilungen 22' empfangen werden können.

Von einer Bedienperson des Senders 12 kann nunmehr über die alphanumerische Tastatur 20 ein Eröffnungszug des Schachspiels ausgewählt werden. Soll beispielsweise der Springer von B1 nach C3 gesetzt werden, wird dies über die alphanumerische Tastatur eingegeben. Bei Aktivierung einer Spielfunktion kann durch den Mikroprozessor 30 die alphanumerische Tastatur 20 auf Spielfunktionen umgeschaltet werden. Allerdings sind auch die einzelnen Züge ohne Umschaltung der Tastatur auf die Spielfunktion möglich. Eine Tastenbelegung der Tastatur 20 ist angedeutet, wie diese üblicherweise bei Mobiltelefonen gegeben ist. Mit den Ziffern 1 bis 0 sind Mehrfachbelegungen der einzelnen Tasten zum Eingeben der Buchstaben des Alphabets möglich. Entsprechend der gewünschten Spielaktion, beispielsweise Springer B1 nach C3, wird dieser Zug über die Tastatur 20 eingegeben und als Kurzmitteilung 22 gesendet. Um diese Kurzmitteilung 22 als Spielzug zu kennzeichnen, kann zusätzlich eine Kennzeichnung, beispielsweise mit der Taste "#", erfolgen, so dass die Kurzmitteilung aus der Zeichenfolge "SB1C3#" besteht. "S" steht hierbei für Springer, "B1" steht hierbei für die Ist-Position und "C3" für die Soll-Position und "#" für die Kennzeichnung als Spielzug.

Diese Zeichenfolge wird über den Dienstanbieter 24 von dem Empfänger 14 oder den Empfängern 14, 14', 14" entsprechend der anhand von Figur 42 und Figur 43 erläuterten Möglichkeiten empfangen. Der Aufbau der Empfänger 14 ist prinzipiell gleich mit dem der Sender 12. Die Zeichenfolge wird also im Empfänger 14 vom Mikroprozessor 30 ausgewertet und infolge der Kennzeichnung mit dem Zeichen "#" als Spielzug erkannt. Ist dem Empfänger 14 zunächst unbekannt, um welches Spiel es sich handelt, kann eine weitere Zusatzkennzeichnung in Form einer Buchstabenkombination, einer Ziffernkombination oder dergleichen erfolgen, die eindeutig identifiziert, ob es sich beispielsweise um einen Spielzug für das Spiel "Schach" handelt. Hieraufhin wird über den Mikroprozessor 30 aus dem Speicherelement 16 die entsprechende Spielmaske aufgerufen und auf der Anzeigeeinrichtung 18 zur Anzeige gebracht. Dieses Aufrufen kann entweder sofort oder nach Lesen der Kurzmitteilung durch die Bedienperson des Empfängers 14 erfolgen. Die Kurzmitteilung 22 wird bis zum Aufruf zwischengespeichert. Mit dem empfängerseitigen Aufruf der Spielmaske wird gleichzeitig die gesendete Spielaktion des Senders 12 auf der Anzeigeeinrichtung 18 visualisiert, indem beispielsweise der Zug "Springer B1 nach C3" angezeigt wird. Die Bedienperson des Empfängers 14 kann nunmehr entweder gleich oder später einen Folgezug, beispielsweise Bauer D7 nach D6, als ihre Spielaktion übermitteln. Der Empfänger 14 übernimmt hiermit die Sendefunktion, während der ursprüngliche Sender die Empfangsfunktion übernimmt. Als Zeichenfolge würde dann "BD7D6#" eingegeben werden.

Entsprechend dem Austausch der Kurzmitteilungen 22 beziehungsweise 22' kann damit von dem Sender 12 und dem Empfänger 14 über einen beliebigen Zeitraum das Schachspiel geführt werden. Die jeweilige Spielmaske 32 mit dem aktuellen Spielstand ist im Speicherelement 16 abgespeichert und kann bei Bedarf über die Menüführung M aufgerufen werden. Somit lässt sich das Spiel auch mit größeren Unterbrechungen führen.

## Patentansprüche

1. Verfahren zum Übermitteln von Informationen von einem Mobiltelefon zu wenigstens einem weiteren Mobiltelefon mittels SMS, **dadurch gekennzeichnet, dass**
• sendeseitig wenigstens ein bestimmtes Symbol in Form der Kombination eines Bildes oder einer Bildfolge und eines Ton oder einer Tonfolge ausgewählt wird;
• sendeseitig eine dem wenigstens einen Symbol zugeordnete, dieses jedoch nicht vollständig repräsentierende, wenigstens ein Zeichen umfassende Zeichenfolge ermittelt wird;
• die Zeichenfolge von dem sendenden Mobiltelefon mittels SMSÜbermittlung zu dem wenigstens einen empfangenden Mobiltelefon gesendet wird und
• empfangsseitig das der Zeichenfolge zugeordnete wenigstens eine Symbol in Form einer Kombination eines Bildes oder einer Bildfolge und eines Ton oder einer Tonfolge ermittelt und auf einer Anzeigeeinrichtung angezeigt und abgespielt wird.

2. Verfahren nach Anspruch 1, **dadurch gekennzeichnet, dass** sendeseitig das bestimmte Symbol aus einer Tabelle von Symbolen ausgewählt wird, wobei das bestimmte Symbol aus einem Speicher abgerufen wird, in welchem Speicher es vor dem Abrufen abgespeichert wurde.

3. Verfahren nach einem der vorhergehenden Ansprüche, **dadurch gekennzeichnet, dass** sendeseitig das bestimmte Symbol und die dem bestimmten Symbol zugeordnete Zeichenfolge mittels eines durch eine Eingabeeinheit gesteuerten Mikroprozessors unter Zuhilfenahme eines in einem Speicher zuvor abgespeicherten Algorithmus ausgewählt wird, und dass empfangsseitig das der empfangenen Zeichenfolge zugeordnete Symbol anhand einer Tabelle von Zeichenfolgen und zugeordneten Symbolen von einem Mikroprozessor unter Zuhilfenahme eines in einem Speicher zuvor abgespeicherten Algorithmus ermittelt wird und aus einem Speicher abgerufen wird, in welchem Speicher es vor dem Abrufen zusammen mit der Zeichenfolge abgespeichert wurde.

4. Verfahren nach einem der vorhergehenden Ansprüche, **dadurch gekennzeichnet, dass** sendeseitig vor dem Absenden einer Zeichenfolge derselben eine Kennung hinzugefügt wird, welche Kennung die Zeichenfolge als verschlüsseltes Symbol kennzeichnet, wobei die Kennung zusammen mit der Zeichenfolge versandt wird, und dass empfangsseitig nur bei denjenigen empfangenen Zeichenfolgen ein zugeordnetes Symbol ermittelt wird, die eine Kennung tragen, welche Kennung die Zeichenfolge als verschlüsseltes Symbol kennzeichnet.

5. Mobiltelefon zum Senden und/oder Empfangen von Informationen mittels SMS, **gekennzeichnet durch**
• einen mit einem Speicher (4) zum Speichern von wenigstens einem Symbol in Form der Kombination eines Bildes oder einer Bildfolge und eines Ton oder einer Tonfolge zusammenwirkenden Mikroprozessor,
• einem Auswahlmittel zum Auswählen wenigstens eines der Symbole,
• einem Zuordnungsmittel zum Zuordnen einer das Symbol nicht vollständig repräsentierenden, wenigstens ein Zeichen umfassenden Zeichenfolge zu dem wenigstens einen Symbol,
• einem Sendemittel und/oder Empfangsmittel zum Senden und/oder Empfangen der Zeichenfolge als SMS,
• und einem Anzeigemittel zum Anzeigen und einem Lautsprecher zum Abspielen des wenigstens einen empfangenen Symbols.

6. Mobiltelefon nach Anspruch 5, **gekennzeichnet durch**
• zusätzliche Zuordnungsmittel zum Zuordnen einer Zeichenfolge zu dem Symbol,
• Kennzeichnungsmittel zum Kennzeichnen der Zeichenfolge als verschlüsseltes Symbol und Sendemittel zum Senden der Zeichenfolge,
• Empfangsmittel zum Empfangen der Zeichenfolge,
• Unterscheidungsmittel zum Unterscheiden einer verschlüsselten Zeichenfolge von einer nicht verschlüsselten Zeichenfolge, wobei die Unterscheidungsmittel ein Erkennungsmittel enthalten, welches eine einer Zeichenfolge hinzugefügte Kennung erkennt, welche Kennung dem Unterscheidungsmittel anzeigt, dass es sich bei der Zeichenfolge um ein verschlüsseltes Symbol handelt, sowie
• Zuordnungsmittel zum Zuordnen eines Symbols zu der empfangenen verschlüsselten Zeichenfolge.

7. Mobiltelefon nach einem der Ansprüche 5 bis 6, **dadurch gekennzeichnet, dass** die Auswahlmittel (6) aufweisen:
• einen Speicher (4) zum Speichern von Symbolen in Form von Kombinationen von eines Bild oder einer Bildfolgen und eines Ton oder einer Tonfolge; einen Mikroprozessor zum Ansteuern des Speichers (4);
• eine Eingabeeinheit (6) zum Eingeben von Befehlen an den Mikroprozessor zum Auswählen dieser Symbole aus dem Speicher (4);
• Zuordnungsmittel in Form einer in einem Speicher abgespeicherten Tabelle dieser Symbole und Zeichenfolgen.

8. Mobiltelefon nach einem der Ansprüche 5 bis 7, **dadurch gekennzeichnet, dass** sowohl dem Sender (12) als auch dem wenigstens einen Empfänger (14) ein Mikroprozessor, der mit wenigstens einem Speichermittel (16) zusammenwirkt, zugeordnet ist, und in dem Speichermittel (16) eine vorgebbare Anzahl von zusammengehörigen, nicht identischen Symbolen in Form von Kombinationen eines Bildes oder einer Bildfolge und eines Ton oder einer Tonfolge mit ihren zugehörigen Zeichenfolgen abgelegt ist, und dass eine Anzeigeeinrichtung zum Anzeigen von wenigstens einem dieser Symbole und eine Sende und Empfangseinrichtung zum Übermitteln des wenigstens einen Symbols vorhanden sind.

9. Mobiltelefon nach einem der vorangehenden Ansprüche 5 bis 8, **dadurch gekennzeichnet, dass** dem Sender (12) und dem wenigstens einen Empfänger (14) ein Mikroprozessor, der mit wenigstens einem Speichermittel (16) zusammenwirkt, zugeordnet ist, und in dem wenigstens einen Speichermittel (16) eine vorgebbare Anzahl von zusammengehörigen, nicht identischen Symbolen in Form von Kombinationen eines Bildes oder einer Bildfolqe und eines Ton oder einer Tonfolqe mit ihren zugehörigen Zeichenfolgen abgelegt sind, und dass eine Anzeigeeinrichtung zum Anzeigen der Bilder oder Bildfolgen der Symbole sowie eine akustische Wiedergabeeinrichtung zum Wiedergeben des wenigstens einen Tones oder der Tonfolqe der Symbole sowie eine Sende- und Empfangseinrichtung zum Übermitteln der Zeichenfolge vorhanden sind..

10. Mobiltelefon nach einem der vorangehenden Ansprüche, **gekennzeichnet durch**:
• einen Speicher (4) zum Speichern von Audio-Information darstellenden Zeichen (a, b, c, d, e, f, g, e);
• ein Auswahlmittel (6) zum Auswählen einer Audio-Information in der Form mindestens eines diese Audio-Information darstellenden Zeichens (a, b, c, d, e, f, g, e) aus dem Speicher (4);
• einen Sender zum Senden des die Audio-Information darstellenden mindestens einen Zeichens (b), wobei die Zeichen (a, b, c, d, e, f, g, e) Töne (a, b, c, d, e, f, g, e) oder Töne darstellende Buchstaben (a, b, c, d, e, f, g, e) sind;
• einen Empfänger zum Empfangen von Audio-Information darstellenden Zeichen (a, b, c, d, e, f, g, e); einen Wandler (18) zum Umwandeln der die Audio-Information darstellenden Zeichen (a, b, c, d, e, f, g, e) in Tonsignale (a, b, c, d, e, f, g, e);
• einen Lautsprecher (24) zum Wiedergeben der Tonsignale (a, b, c, d, e, f, g, e).

## Claims

1. Method for the transmission of information from a mobile phone to at least one other mobile phone via SMS, **characterized in that**
• the on the side of the sender phone at least a definite symbol in the form of a combination of a picture or a sequence of pictures and of a tone or sequence of tones is being selected;
• on the side of the sender phone, one sequence of signs, comprising at least one sign, and which sequence pertains to that at least one symbol and which though does not represent this symbol completely, is being determined;
• the sequence of signs is being transmitted from the sending mobile phone via SMS-transmission to the at least one receiving mobile phone and
• on the side of the receiving phone, the symbol which pertains to the at least one symbol in the form of a combination of a picture/sequence of pictures and tone/sequence of tones is being determined and displayed on a display or played on a loudspeaker.

2. Method according to claim 1, **characterized in that** symbol on the side of the sender phone is being selected from a table of symbols, whereby the specific symbol is being retrieved from a memory in which it has been stored before retrieving.

3. Method according to one of the preceding claims, **characterized in that** on the side of the sender phone the specific symbol and the sequence of signs assigned to this symbol is being selected by means of a microprocessor, controllable by an input unit and by aid of an algorithm which was stored in a memory in advance, and that on the side of the receiver phone the symbol pertaining to the received sequence of signs is determined using a table of sequence of signs and assigned symbols by a microprocessor by aid of an algorithm pre-stored in a memory and recalled from the memory in which it was stored together with the sequence of signs before recalling.

4. Method according to one of the preceding claims, **characterized in that** on the side of the sender, before sending a sequence of signs, a known value is added, which known value identifies the sequence of signs as coded symbol, whereby the known value is being sent together with the sequence of signs, and the on the side of the receiving phone only to those received sequence of signs an assigned symbol is determined which do carry a known value, which known value identifies the sequence of signs as coded symbol.

5. Mobil phone for sending and/or receiving informations via SMS, **characterized by**
• a microprocessor working together with a memory (4) for storing of at least a symbol in the form of a combination of a picture or a sequence of pictures and a tone or a sequence of tones,
• a selecting means for selecting at least one of the symbols,
• an assigning means for assigning a sequence of signs which comprises at least a sign to the at least one symbol and which does not completely represent said symbol,
• a sender means and/or receiver means for sending and/or receiving the sequence of signs as SMS,
• and a displaying means for displaying and a loudspeaker for playing the at least one received symbol.

6. Mobile phone according to claim 5, **characterized by**
• additional assigning means for assigning a sequence of signs to the symbol,
• labelling means for labelling the sequence of signs as coded symbol and sending means for sending the sequence of signs;
• receiving means for receiving the sequence of signs;
• distinguishing means for distinguishing a coded sequence of signs from a non-coded sequence of signs, whereby the distinguishing means comprise an identifying means which recognizes an added known value assigned to a sequence of signs and indentifies the same as a coded symbol, as well as
• assigning means for assigning a symbol to the received coded sequence of signs.

7. Mobile phone according to one of claims 5 to 6, **characterized in that** the selecting means (6) comprise: a memory (4) for storing of symbols in the form of combinations of a picture/sequence of pictures and a tone/sequence of tones; a microprocessor for controlling the memory (4); an input unit (6) for the input of commands to the microprocessor for selecting these symbols from the memory (4); assigning means in the form of a table of these symbols and sequences of signs stored in the memory.

8. Mobile phone according to one of claim 5 to 7, **characterized in that** there is a microprocessor assigned to the sender (12) as well as to the at least one receiver (14), which microprocessor does work together with at least one memory (16) and in the memory (16) a pre-determinable number of not identical symbols is being stored, in the form of a combination of a picture/sequence of pictures and a tone/sequence of tones with their pertaining sequence of signs, and that there is a display for displaying at least one of these symbols and a sending and receiving means for the transmission of the at least one symbol.

9. Mobile phone according to one of claim 5 to 8, **characterized in that** there is a microprocessor assigned to the sender (12) as well as to the at least one receiver (14) which microprocessor does work together with at least one memory (16) and in the memory (16) a pre-determinable number of not identical symbols is being stored, in the form of a combination of a picture/sequence of pictures and a tone/sequence of tones with their pertaining sequence of signs, and that there is a display for displaying the pictures or sequences of pictures of the symbols as well as an acoustic replay device for replaying the at least one ton or sequence of tones of the symbols as well as a sender and receiver device for the transmission of the sequence of signs.

10. Mobile phone according to one of the preceding claims, **characterized in that** there is a
• a memory (4) for storing of signs a,b,c,d,e,f,g,e which do represent audio-information;
• a selecting means (6) for selecting an audio-information in the form of at least on of these signs a,b,c,d,e,f,g,e which do represent audio-information from the memory (4);
• a sender for sending the at least one sign b which represents the audio information, whereby the sign a,b,c,d,e,f,g,e are tones a,b,c,d,e,f,g,e or characters a,b,c,d,e,f,g,e which do represent tones;
• a receiver for receiving signs a,b,c,d,e,f,g,e which do represent audio information; a modifier (18) for transforming of the signs a,b,c,d,e,f,g,e which do represent audio-information into tone signals a,b,c,d,e,f,g,e;
• a loudspeaker (24) for replaying the tone signals a,b,c,d,e,f,g,e.

## Revendications

1. Procédé pour la transmission d'informations à partir d'un téléphone mobile vers au moins un autre téléphone mobile par SMS, **caractérisé en ce que**
• du côté de l'émetteur, on choisi au moins un symbole déterminé d'une image, d'une suite d'images, d'un son, d'une suite de sons ou d'une combinaison de symboles de ce type;
• du côté de l'émission, une suite de signes comprenant au moins un signe associé à au moins un symbole mais représentant celui-ci de façon incomplète;
• la suite de signes est envoyée au moyen d'une transmission par SMS à partir du téléphone mobile émetteur vers au moins le téléphone mobile récepteur;
• du côté de la réception est déterminé le au moins un symbole, associé à la suite de signes, d'une image, d'une suite d'images, d'un son, d'une suite de sons ou d'une combinaison de tels symboles et est affiché et restitué sur une direction d'affichage.

2. Procédé selon la revendication 1, **caractérisé en ce que**, du côté de l'émetteur, on a choisi le symbole déterminé à partir d'un tableau de symboles ; le symbole déterminé étant lu à partir d'une mémoire, dans laquelle mémoire il est mémorisé avant d'être lu.

3. Procédé selon une des revendication précédentes, **caractérisé en ce que** du côté de l'émetteur, le symbole déterminé et la suite de signes associée au symbole ont été choisis au moyen d'un microprocesseur commandé par l'unité d'entrée au moyen d'un algorithme mémorisé auparavant dans une mémoire, et **en ce que** du côté de la réception, on détermine le symbole associé à la suite de signes reçue par un microprocesseur grâce à un algorithme mémorisé auparavant dans une mémoire au moyen d'un tableau de suite de signes et de symboles associés ; ledit symbole étant lu à partir de la mémoire dans laquelle il est mémorisé avant d'être lu, ensemble avec la suite de signes.

4. Procédé selon une des revendications précédentes, **caractérisé en ce que** du côté de l'émetteur, on ajoute , avant l'émission d'une suite de signes , à ladite suite un marquage , lequel marquage caractérise la suite de signes en tant que symbole codé ; le marquage étant envoyé ensemble avec la suite d'images , et **en ce que**, du côté de la réception, on détermine un symbole associé uniquement par les suites de signes comportant un marquage, lequel marquage caractérise la suite de signes en tant que symbole codé.

5. Téléphone mobile pour l'émission et / ou la réception d'informations au moyen d'un SMS **caractérisé par**:
• un microprocesseur, coopérant avec une mémoire (4) pour mémoriser au moins un symbole sous la forme d'une image, une suite d'images, un son, une suite de sons ou une combinaison de symboles de ce type,
• un moyen de sélection pour sélectionner au moins un des symboles,
• un moyen d'association pour associer une suite de signes à au moins un des symboles, ne représentant de façon incomplète un symbole et comportant au moins un signe,
• un moyen d'émission et / ou un moyen de réception pour émettre et / ou recevoir la suite de signes comme SMS, et
• un moyen d'affichage pour afficher et un haut parleur pour restituer le au moins un symbole reçu.

6. Un téléphone mobile selon la revendication 5, **caractérisé par**
• des moyens d'association supplémentaires pour associer une suite de signes au symbole,
• des moyens de marquage pour marquer la suite de signes en tant que symbole codé, et des moyens d'émission pour émettre la suite de signes,
• des moyens de réception pour recevoir la suite de signes,
• des moyens de distinction pour distinguer une suite de signes codée d'une suite de signes non codée; les moyens de distinction comportant un moyen de reconnaissance qui reconnaît un marquage ajouté à une suite de signes, lequel marquage montre au moyen de distinction que la suite de signes représente un symbole codé, ainsi que
• des moyens d'association pour associer un symbole à la suite de signes reçue codée.

7. Un téléphone mobile selon une des revendications 5 à 6, **caractérisé en ce que** les moyens de sélection (6) comportent:
• une mémoire (4) pour mémoriser des symboles sous la forme d'une image, d'une suite d'images, d'un son, d'une suite de sons ou d'une combinaison de symboles de ce type,
• un microprocesseur pour commander la mémoire (4);
• une unité d'entrée (6) pour rentrer des commandes dans un microprocesseur afin de sélectionner ces symboles parmi la mémoire (4);
• des moyens d'association sous la forme d'un tableau de ces symboles et suites de signes, mémorisé dans une mémoire.

8. Un téléphone mobile selon une des revendications 5 à 7, **caractérisé en ce que** l'émetteur (12) ainsi qu'au moins un récepteur (14) sont associés à un microprocesseur qui coopère avec au moins un moyen de mémorisation (16) , et **en ce que**, dans le moyen de mémorisation (16), on a stocké un nombre susceptible d'être prédéterminé de symboles correspondants, non identiques sous la forme d'une image, d'une suite d'images, d'un son, d'une suite de sons ou d'une combinaison de symboles de ce type avec leurs suites de signes associées, et **en ce qu'**il existe un dispositif d'affichage destiné à afficher au moins un de ces signaux ainsi qu'un dispositif d'émission et de réception pour la transmission d'au moins un symbole.

9. Un téléphone mobile selon une des revendications 5 à 8, **caractérisé en ce que** l'émetteur (12) et au moins un récepteur (14) sont associés à un microprocesseur qui coopère avec au moins un moyen de mémorisation (16) , et **en ce que** dans le moyen de mémorisation (16), on a stocké un nombre susceptible d'être prédéterminé de symboles correspondants, non identiques sous la forme d'une image, d'une suite d'images, d'un son, d'une suite de sons ou d'une combinaison de tels symboles, avec leurs suites de signes associées, et **en ce qu'**il existe un dispositif d'affichage pour afficher les images ou suites d'images des symboles ainsi qu'un dispositif de représentation acoustique pour la représentation d'au moins un son ou de la suite de sons des symboles, ainsi qu'un dispositif d'émission et de réception pour la transmission de la suite de signes.

10. Un téléphone mobile selon une des revendications précédentes, **caractérisé par**:
• une mémoire (4) pour mémoriser des signes a, b, c, d, e, f, g, e représentant une information audio;
• un moyen de sélection (6) pour sélectionner une information audio sous la forme d'un signe parmi les signes a, b, c, d, e, f, g, e représentant cette information audio;
• un émetteur pour émettre au moins le signe (b) représentant l'information audio ; où les signes a, b, c, d, e, f, g, e sont des sons a, b, c, d, e, f, g, e ou des lettres a, b, c, d, e, f, g, e représentant des sons;
• un récepteur pour recevoir des signes a, b, c, d, e, f, g, e représentant l'information audio ; un convertisseur (18) pour convertir les signes a, b, c, d, e, f, g, e, représentant l'information audio en signaux sonores a, b, c, d, e, f, g, e;
• un haut parleur (24) pour restituer les signaux sonores a, b, c, d, e, f, g, e.
